(19) Europäisches Patentamt
European Patent Office
Office européen des brevets

(11) **EP 3 580 421 B1**

(12) **EUROPÄISCHE PATENTSCHRIFT**

(45) Veröffentlichungstag und Bekanntmachung des Hinweises auf die Patenterteilung:
**18.10.2023 Patentblatt 2023/42**

(21) Anmeldenummer: **18707626.0**

(22) Anmeldetag: **11.01.2018**

(51) Internationale Patentklassifikation (IPC):
*E06B 9/13* (2006.01)    *E05F 15/77* (2015.01)
*E06B 9/68* (2006.01)

(52) Gemeinsame Patentklassifikation (CPC):
**E06B 9/13; E05F 15/77;** E05Y 2400/66;
E06B 2009/6836; E06B 2009/6845

(86) Internationale Anmeldenummer:
**PCT/EP2018/050683**

(87) Internationale Veröffentlichungsnummer:
**WO 2018/145852 (16.08.2018 Gazette 2018/33)**

(54) **TOR MIT EINEM INTELLIGENTEN TORBLATT, WELCHES EINE ELEKTRISCH AUTARKE TORBLATTEINRICHTUNG AUFWEIST, SOWIE VERFAHREN UND VERWENDUNG HIERFÜR**

DOOR WITH AN INTELLIGENT DOOR LEAF WHICH HAS AN ELECTRICALLY AUTONOMOUS DOOR LEAF DEVICE, AND METHOD FOR SAME

PORTAIL AVEC UN VANTAIL DE PORTAIL INTELLIGENT, QUI POSSÈDE UN DISPOSITIF DE VANTAIL DE PORTE ÉLECTRIQUEMENT AUTONOME, ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2017 DE 102017102599**

(43) Veröffentlichungstag der Anmeldung:
**18.12.2019 Patentblatt 2019/51**

(73) Patentinhaber: **Efaflex Tor- und Sicherheitssysteme GmbH & Co. KG**
**84079 Bruckberg (DE)**

(72) Erfinder: **EICHSTETTER, Karl**
**84184 Tiefenbach (DE)**

(74) Vertreter: **Kuhnen & Wacker**
**Patent- und Rechtsanwaltsbüro PartG mbB**
**Prinz-Ludwig-Straße 40A**
**85354 Freising (DE)**

(56) Entgegenhaltungen:
EP-A1- 2 067 922     EP-A1- 3 075 944
EP-A2- 1 441 101     DE-A1-102008 046 538
DE-A1-102010 028 425     DE-U1-202006 020 317
DE-U1-202009 009 058

**Beschreibung**

Die Erfindung betrifft ein Tor, insbesondere ein schnelllaufendes Industrietor, mit einem Torblatt, welches eine elektrisch autarke elektromechanische Torblatteinrichtung aufweist, sowie ein Verfahren für ein solches Tor.

Schnelllaufende Tore sind in der Praxis vielfach bekannt und seit langem bewährt. Sie dienen als Abschluss für Toröffnungen unterschiedlichster Art im privaten und gewerblichen Bereich. Häufig dienen Industrietore auch der Trennung zwischen dem Innen-und Außenbereich eines Gebäudes. So sind als schnelllaufende Tore auch Roll- und Falttore bekannt.

Beispielsweise wird das Torblatt eines Rolltors im Zuge einer Öffnungsbewegung im Bereich des Torsturzes aufgewickelt oder gegenüber den anderen Wickellagen berührungsfrei in einer Rundspirale oder einer langgestreckten Spirale geführt. Letztere Ausgestaltungsweise wird insbesondere für industrielle Zwecke genutzt, da hiermit hohe Bewegungsgeschwindigkeiten bei großer Lebensdauer und Zuverlässigkeit erzielbar sind.

Derartige schnelllaufende Industrietore haben sich für einen zuverlässigen Abschluss von hochfrequentierten Toröffnungen bewährt. Die Torblätter dieser Industrietore werden mit großen Hüben, vielfach einige Meter, bewegt. Aufgrund der häufig erreichten hohen Betätigungsgeschwindigkeit von 3 m/s und mehr ist es zumeist möglich, derartige Industrietore zwischen zwei aufeinanderfolgenden Durchfahrten eines Gabelstaplers oder dergleichen zu schließen und so einen Schutz gegen Witterungseinflüsse, Zugluft oder einen Verlust der klimatisierten Atmosphäre in einem Raum herzustellen. Damit trägt eine solches Tor bei der Realisierung eines energieeffizienten Gebäudes bei.

Um einen sicheren und komfortablen Betrieb solcher Industrietore zu gewährleisten können eine Reihe von Sensoren vorgesehen werden. Diese Sensoren dienen regelmäßig der Erhöhung der Betriebssicherheit des Tors und/oder der Überwachung des Betriebszustands des Tors. Beispielsweise dienen Kollisionssensoren, auch Crashsensoren genannt, am unteren Ende des Torblatts der Erfassung einer Kollision des sich bewegenden Torblatts mit einer Person oder einem Gegenstand.

Bei einem solchen Zusammenstoß mit einem Hindernis sind regelmäßig eine Person und/oder Objekte schützende Maßnahmen zu ergreifen.

Die Stromversorgung für derartige Sensoren erfolgt regelmäßig mittels Spiral- oder Schleppkabel, welche im regulären Betrieb mechanisch altern, insbesondere da die Bewegungsbelastung groß ist. Zudem besteht die Gefahr der mechanischen Beschädigung dieser Kabel, und auch die abstehenden Teile der Kabelhalterungen stellen ein gewisses Verletzungsrisiko für Personen in der Nähe zu dem schnelllaufenden Tor dar.

Als Alternative zu den Schleppkabeln werden auch herkömmlich Energieketten verwendet, welche in das Torblatt eingebaut werden. Damit sind diese Verbindungen für den Betreiber unsichtbar verlegt. Jedoch weisen auch Energieketten das Problem des Verschleißes beziehungsweise der mechanischen Alterung auf.

Zudem ist für den Einsatz von Kabeln und Energieketten ein hoher konstruktiver Aufwand erforderlich. Dies hat seine Ursache in der starken mechanischen Belastung bei Bewegung des Torblatts und unter Umständen in den Einsatzbedingungen des Tors, was mit entsprechenden Kosten verbunden ist. Beispielsweise müssen bei Verwendung des Tors für Kühlhäuser oder Waschstraßen sehr hochwertige Kabel oder Energieketten verwendet werden. Damit verbunden ist ein hoher Platzbedarf, der für die Biegeradien dieser Kabel und Energieketten erforderlich ist.

Die DE 20 2008 013 354 U1 offenbart als Alternative zu einer Verkabelung eine Batterie als Stromversorgung für eine Sensoreinheit in der untersten Lamelle eines Torblatts eines Rolltors. Eine solche Batterie muss fristgerecht getauscht werden, weshalb eine regelmäßige Wartung erforderlich ist. Nachdem im Torblatt nur wenig Platz verfügbar ist, wird bei der DE 20 2008 013 354 U1 eine Knopfzelle mit sehr geringer Bauhöhe eingesetzt. Damit ist zudem die Energiekapazität dieser Batterie recht gering, was Nachteilhaft zu kurzen Wartungsintervallen führt.

Zudem sind Batterien häufig auch aus sicherheitstechnischen Gründen nicht erwünscht. Beispielsweise müssen die Tore auch im Brandfall zuverlässig funktionieren (unter Umständen muss das Tor geschlossen bleiben oder sich auf Anfrage einer Leitstelle zwingend öffnen), was bei einem reinen Batteriebetrieb nicht zwangsweise gewährleistet ist.

Für eine längere Betriebsdauer und eine erhöhte Verfügbarkeit einer batteriebetriebenen Vorrichtung des Tors werden deshalb regelmäßig Spezialbatterien eingesetzt. Diese Spezialbatterien sind keineswegs alltägliche Handelsware und sind oft nur über spezielle Kanäle zu erwerben. Auch der Transport solcher Batterien zum Installationsort ist mit einschränkenden gesetzlichen Auflagen verbunden. In Folge führt die Verwendung von Spezialbatterien bei Industrietoren zu erhöhten Kosten und einem erhöhten Einsatzrisiko.

Die DE 200 01 473 U1 offenbart ein Industrietor mit einem Sicherheitssystem zum Schutz von Personen oder Gegenständen an bewegbaren und/oder angetriebenen Toren. Dabei ist eine auf dem Torblatt aufsitzende Signalübertragungseinheit mit einem Energiespeicher in Form eines Akkus vorgesehen, welcher von Extern über eine induktive Energieeinkopplungseinrichtung beziehungsweise eine induktive Energieübertragungseinheit oder alternativ über Solarpanels versorgt wird. Die Datenübertragung zwischen dem Tor und einer Torsteuerungseinrichtung erfolgt hier über eine drahtlose Datenübermittlung.

Die beiden Möglichkeiten zur Energieversorgung einer am Tor angebrachten elektrischen Einrichtung, die in der DE 200 01 473 U1 offenbart sind, vergrößern zwar das Wartungsintervall, haben jedoch den Nachteil eines hohen konstruktiven Aufwands und einer erhöhten Fehleranfälligkeit. So muss zur induktiven Versorgung einer Vorrichtung an dem Torblatt ein entsprechender induktiver Übertrager in der Nähe des Tors vorgesehen werden, der ein ausreichend starkes Magnetfeld erzeugt. Bei diesem "Kabelersatz" ist insbesondere nachteilhaft, dass dieser konstruktiv aufwändig ist und auch Übertragungsverluste auftreten, welche die Effizienz dieser Energieversorgung verringern. Zudem kann eine induktive Energieübertragung regelmäßig nur an einer bestimmten Öffnungsposition des Torblatts erfolgen, da ein induktiver Übertrager in seiner Reichweite begrenzt ist. Folglich ist eine zuverlässige Energieversorgung nicht gewährleistet, wenn die Torsteuerung beispielsweise derart eingerichtet ist, dass die Position, bei der die Energieübertragung stattfinden kann, nicht regelmäßig angefahren wird oder diese Position nur sehr kurzzeitig passiert wird.

Das Vorsehen eines Solarpanels entsprechend der DE 200 01 473 U1 auf dem Tor birgt weiter das Risiko der Verschmutzung und Beschädigung des Panels, womit diese Form der Energieversorgung ebenso unzuverlässig sein kann. So werden das Torblatt und damit das empfindliche Solarpanel mechanisch stark beansprucht. Ebenso wird bei einer Kollision beispielsweise eines Fahrzeugs mit dem Torblatt das zerbrechliche Solarpanel der Gefahr einer Beschädigung ausgesetzt. Weiter ändert sich die Position des Solarpanels relativ zu der verfügbaren Lichteinstrahlung je nach Öffnungs- und Schließzustand des Tors, was zu verschlechterten Betriebsbedingungen für das Solarpanel führt. Es muss die elektrische Einrichtung des Tors auch in Wintermonaten mit wenig verfügbarer Sonnenenergie sowie bei nächtlichem Betrieb zuverlässig versorgt werden können. Das heißt, dass die Energie für das Tor unabhängig von Tages- oder Jahreszeiten zu Verfügung stehen muss, wenn dieses bewegt wird. Diese Voraussetzung ist bei Solarpanels nicht erfüllt. Ist das Tor beispielsweise im Gebäudeinneren vorgesehen, so ist an dieser Stelle kein Tageslicht verfügbar.

So führt die Lösungsansätze der DE 200 01 473 U1 zu Einschränkungen bei dem Betrieb des Tors und auch zu Nachteilen bei der Zuverlässigkeit des Tors. Zudem sind diese Lösungsansätze mit erheblichen Kosten verbunden.

Eine weitere Lösung wird auch in DE102008046538 A1 vorgeschlagen, die ein Tor offenbart, das folgendes umfasst: ein Torblatt, welches in seitlichen Führungen geführt ist, und welches eine Toröffnung abdeckt, und welches eine erste und eine zweite Seite aufweist; und eine Antriebseinrichtung zum Bewegen des Torblatts zwischen einer Öffnungs- und Schließstellung; und eine Torsteuereinrichtung zum Ansteuern der Antriebseinrichtung, wobei die Torsteuereinrichtung eine erste Kommunikationseinheit aufweist;eine in dem Torblatt angeordnete elektrisch autarke Torblatteinrichtung, aufweisend : zumindest eine Sensoreinheit zum Erfassen zumindest einer physikalischen Größe; und einen Energieumformer, welcher nichtelektrische Energie in elektrische Energie wandelt; und, eine zweite Kommunikationseinheit, wobei die erste und die zweite Kommunikationseinheit miteinander drahtlos kommunizieren; und zumindest eine Aktoreinheit.

Es ist Aufgabe der Erfindung ein Tor vorzusehen, welches einen zuverlässigen und optimierten Betrieb desselben ermöglicht, und/oder kostengünstig ist.

Es ist eine weitere Aufgabe der Erfindung ein Verfahren für ein Tor vorzusehen, welches einen zuverlässigen und optimierten Betrieb des Tors ermöglichen kann.

Diese Aufgaben werden durch die Gegenstände der unabhängigen Ansprüche gelöst. Weitere Aspekte und vorteilhafte Weiterbildungen sind Gegenstand der abhängigen Ansprüche.

Erfindungsgemäß ist ein Tor, insbesondere schnelllaufendes Industrietor vorgesehen, welches alle Merkmale des Anspruchs 1 besitzt.

Ein Tor im Sinne der Erfindung ist eine Vorrichtung mit einem beweglichen Torblatt, welches eine Toröffnung abdeckt.

Ein solches Tor dient beispielsweise als Hallenabschluss oder der thermischen Trennung in Gebäuden (beispielsweise der Trennung zwischen Lager und Kühlbereich).

Ein erfindungsgemäßes Tor ist beispielsweise ein Roll- oder Falttor, bei dem das Torblatt, welches eine Mehrzahl von Einzelelementen umfasst, in seitlich angebrachten Führungen geführt ist. Diese Einzelelemente des Torblatts, auch als Lamellen oder Torzargen bezeichnet, sind beweglich oder abwinkelbar miteinander verbunden.

Das Tor kann insbesondere ein schnelllaufendes Industrietor sein, bei dem das Torblatt mit hohen Spitzengeschwindigkeiten, mit mehr als 1 m/s, vorzugsweise mit mehr als 2 m/s oder insbesondere mit mehr als 3 m/s bewegt wird. Diese Bewegung wird durch eine Antriebseinrichtung des Tors bewirkt, welche beispielsweise einen leistungsfähigen Elektromotor, einen pneumatischen Hubzylinder oder eine Hydraulik aufweist. Weiter kann die Antriebseinrichtung weitere mechanische Komponenten aufweisen, wie zum Beispiel Getriebe, Riemen oder Kopplungsglieder.

Das Tor ist zudem mit einer Torsteuereinrichtung vorgesehen, welche eine halb- oder vollautomatische Steuerung des Tors vornimmt. Eine derartige Torsteuereinrichtung weist üblicherweise einen Mikrocomputer mit Steuerprogrammen (Software) auf, welche den Öffnungs- und Schließbetrieb sowie verschiedene Bedien- und/oder Sicherheitsroutinen vorsehen. Alternativ kann die Torsteuereinrichtung fest verdrahtet ausgeführt sein. Zudem kann bei der Torsteuereinrichtung ein Bedienelement, beispielsweise ein Druckschalter, zur manuellen Öffnung des Tors vorgesehen sein.

Weiter weist das Tor eine Torblatteinrichtung auf, welche in dem Torblatt angeordnet ist, das heißt, die Torblatteinrichtung ist in das Torblatt integriert. Die Torblatteinrichtung dient der Erfassung, Weiterverarbeitung und Kommunikation/Übertragung von physikalischen Größen, welche von der Torsteuereinrichtung beim Betrieb des Tors berücksichtigt werden sollen.

So weist die Torblatteinrichtung zumindest einen Sensor, beispielsweise einen Temperatursensor oder einen Beschleunigungssensor, auf, wobei die erfasste physikalische Größe als ein betriebsrelevanter Parameter (d.h., als ein für die Auslösung einer Bewegung des Torblatts oder den Betrieb des Tors allgemein relevanter Parameter) mittels einer zweiten Kommunikationseinheit der Torblatteinrichtung an eine erste Kommunikationseinheit der Torsteuereinrichtung übertragen wird. Im einfachsten Fall ist die erste Kommunikationseinheit eine Empfangseinheit für ein Funksignal, und die zweite Kommunikationseinheit eine dazu komplementäre Sendeeinheit. Alternativ können die Informationen auch über Infrarot übertragen werden.

Die Kommunikationseinheit (d.h., die zumindest eine Sendeeinheit) der Torblatteinrichtung ist vorzugsweise eine (Ultra-) Low-Power-Funkeinheit, welche für einen besonders niedrigen Energieverbrauch optimiert ist. Insbesondere kann eine Kommunikation zwischen der Sende- und der Empfangseinheit nur bedarfsweise erfolgen. Die Kommunikation kann weiter beispielsweise auf dem 433-MHz oder dem 833-MHz Band erfolgen. Insbesondere kann die Sendeeinheit die betriebsrelevanten Parameter selbstständig senden, wenn ein entsprechendes sendeauslösendes Ereignis vorliegt (beispielsweise wird dann gesendet, wenn ein erfasster Sensorwert einen vorbestimmten Schwellwert überschritten hat). Alternativ kann die Sendeeinheit in regelmäßigen Zeitintervallen senden (beispielsweise können Temperaturmessungen alle 5 Minuten übertragen werden).

Für den vorstehend erläuterten Einsatzzweck ist die Torblatteinrichtung elektrisch autark und auch ohne Batterie ausgebildet. Damit entfallen beispielsweise die Wartungen einer Batterie, und auch extern angebrachte Vorrichtungen, beispielsweise eine Solarzelle, können vermieden werden. Zudem sind keine Verkabelungen zur Stromversorgung der Torblatteinrichtung erforderlich, womit erheblicher mechanischer Aufwand und auch das Risiko von Kabelbrüchen vermieden wird. So müssten bei einer herkömmlichen Lösung im Gegensatz dazu die Kabel zur Energieversorgung der Torblatteinrichtung derart ausgelegt sein, dass diese auch die Laufwege und die Beschleunigungskräfte des Torblatts verkraften, was insbesondere bei einem Industrietor ein Problem darstellen kann

Damit ist es möglich, den Betrieb des Tors zuverlässiger zu gestalten und zu optimieren. Beispielsweise werden die Ausfallzeiten des Tors verringert, die bei Kabelbrüchen der Signalleitungen oder aufgrund einer leeren Batterie entstehen würden.

Der Energieumformer ist erfindungsgemäß ein Generator für elektrische Leistung beziehungsweise Energie, wobei nichtelektrische Energieformen aus der Umgebung oder der Bewegung des Torblatts in elektrische Energie umgewandelt werden, wodurch im Torblatt selbst elektrischer Strom erzeugt wird. In anderen Worten schafft die Torblatteinrichtung die zum eigenen Betrieb erforderliche elektrische Energie selbst. Durch den Einsatz des Energieumformers ist die Torblatteinrichtung elektrisch autark ausgeführt, das heißt, dass keine elektrische Fremdversorgung beziehungsweise elektrische Zusatzversorgung der Torblatteinrichtung erforderlich ist (beispielsweise ist keine elektrische beziehungsweise induktive Einspeisung wie bei der DE 200 01 473 U1 erforderlich). Damit ist die durch den Energieumformer gewandelte beziehungsweise aus der Umgebung "eingesammelte" Energie zum Betrieb der Verbraucher der Torblatteinrichtung alleine ausreichend.

Die nichtelektrische Energie ist dabei beispielsweise mechanische oder thermische Energie. Der Energieumformer und die Verbraucher in der Torblatteinrichtung sind weiter derart ausgelegt, dass eine zuverlässige Stromversorgung gewährleistet ist.

Dazu sind die elektronischen Komponenten in der Torblatteinrichtung vorzugsweise/optional derart ausgelegt, dass diese sehr niedrigen Stromverbräuche aufweisen, und vorzugsweise nur bei Bedarf bestromt werden. Derartige elektronische Komponenten sind beispielsweise als "ultra low-power" Komponenten erhältlich.

Grundsätzlich weisen insbesondere industrielle Schnelllauf-Tore mechanische Rahmenbedingungen auf, die den Einsatz eines mechanischen Energieumformers begünstigen. So gibt es bei solchen Toren regelmäßig recht hohe Beschleunigungskräfte (regelmäßig einige G), womit ein mechanischer Energieumformer mit einer hohen Energieausbeute eingesetzt werden kann.

Dadurch, dass zudem bei derartigen Toren die Einsatzbedingungen vorab genau bekannt sind, beispielsweise sind die Beschleunigungswerte und Laufwege des Torblatts und auch der Einsatzort bekannt, kann die Torblatteinrichtung mit dem erfindungsgemäßen Energieumformer besonders gut ausgelegt werden, was die Energieausbeute nochmals steigert. Beispielsweise sind die vorhandenen mechanischen Energieumwandlungspotentiale pro Bewegung des Torblatts (auch im Verhältnis zum Energieverbrauch pro Bewegung des Torblatts) genau definiert. Aufgrund dieser günstigen Rahmenbedingungen kann die gesamte Torblatteinrichtung elektrisch autark ausgelegt werden.

Beispielsweise kann experimentell ermittelt werden, dass ein elektromechanischer Energiewandler pro Hub (d.h., pro Öffnungs- oder Schließbewegung) des Tors eine bestimmte Energiemenge, beispielsweise 25 mWs, erzeugt. Entsprechend können die Verbraucher der Torblatteinrichtung unter Berücksichtigung von Energieverlusten in der gesamten Torblatteinrichtung beispielsweise 12,5 mWs pro Hub (= 50% von 25 mWs) verbrauchen. Ist bei vorstehendem Beispiel der Sensor der Torblatteinrichtung beispielsweise ein Kollisionssensor, so müssen die Verbraucher der Torblatteinrichtung zeitlich übereinstimmend auch nur bei Bewegung des Torblatts (insbesondere nach der Initialbeschleunigung des Torblatts) mit Energie versorgt werden. Diese zeitliche Parität von Energieumwandlung und Energiebedarf kann zu einer anwendungsorientierten und elektrisch autarken Energieversorgung der Torblatteinrichtung führen, was die Zuverlässigkeit dieser erhöht.

Auch werden -wie schon ausgeführt- beispielsweise eine Batterie oder Kabel vermieden, welche kostenintensiv und fehleranfällig sind. Die elektrisch autarke Versorgung der Verbraucher der Torblatteinrichtung mittels eines Energieumformers verringert damit die Ausfallwahrscheinlichkeit dieser Einrichtung. Die Nichtverwendung einer Batterie trägt zudem den vorher beschriebenen Sicherheits- und Umweltaspekten Rechnung, da auch kein Transport, keine Entsorgung und Wartung, und unter anderem kein Wechsel von Batterien mehr erforderlich sind.

Ferner ist keine anderweitige zusätzliche Vorrichtung zur elektrischen Energieversorgung der Torblatteinrichtung am Tor, beispielsweise ein induktiver Übertrager, erforderlich. Der konstruktive Aufbau der Torblatteinrichtung ist kompakt und somit in den geringen verfügbaren Platz im Torblatt integrierbar, ohne aufwendige Änderungen am Gesamtaufbau des Torblatts vornehmen zu müssen. Zudem ist eine derartige Vorrichtung wartungsfrei beziehungsweise wartungsarm.

Zusammengefasst ist die erfindungsgemäße Torblatteinrichtung zuverlässiger und kostengünstiger.

Mittels der Art und Weise der erfindungsgemäßen Energieversorgung können weiter einige Anwendungen für das Tor effektiv realisiert werden. Durch die zumindest eine Sensoreinheit der Torblatteinrichtung können beispielsweise betriebsrelevante Umgebungsparameter des Tors, wie die Außen- oder Innentemperatur, erfasst werden. Auch sicherheitskritische Parameter zur Kollisionsverhinderung oder -reaktion des Torblatts, die Position des Torblatts oder ein Verriegelungszustand können gezielt überwacht werden.

Die von Sensoren gewonnenen Informationen können auch in selbstständiger bzw. intelligenter Weise direkt an die zumindest eine Aktoreinheit weitergeleitet werden, welche diese Informationen umsetzt. Alternativ können die von den Sensoren gewonnenen Informationen auch durch die Recheneinheit ausgewertet werden, wobei die Recheneinheit entsprechend vorgegebener Regeln, Steuerbefehle an die Aktoreinheit übergibt. Als Aktoreinheit kann beispielsweise ein Magnetauslöser, Relais oder ein kleiner elektrischer Stellmotor vorgesehen sein. Die Einsatzmöglichkeiten sind vielfältig, wie etwa ein Verriegeln des Torblatts, ein Schutz vor ungewollter Bewegung, ein Einbruchsschutz oder ein Melden der von den Sensoren erfassten Informationen mit Hilfe von Anzeigeelementen, beispielsweise mit Leuchtdioden (LEDs). Beispielsweise können Informationen betreffend am Torblatt angeordneten mechanischen Verriegelungen erfasst werden. Diese mechanischen Verriegelungen können beispielsweise vom Betreiber etwa mit einem Schlüssel betätigt werden. Ist das Tor verriegelt worden, darf der Motor nicht mehr angesteuert werden. Diese Information wird von den entsprechenden Sensoren erfasst und an die Steuerung weitergeleitet. Dies ist eine beispielhafte Ausführungsform eines intelligenten Tores.

Erfindungsgemäß weist die Torblatteinrichtung den Energieumformer, die Sensoreinheit, die Sendeeinheit, sowie vorzugsweise zumindest eine Aktoreinheit auf. Mit diesen funktionellen Einzelkomponenten kann ein "intelligentes" Torblatt realisiert werden, welches Betriebsparameter des Torblatts erfassen und selbstständig sowohl mittels des zumindest einen Aktors direkt in Reaktionen umsetzt, als auch, vorzugsweise per Funk, an die Steuereinrichtung übermitteln kann, und dabei zudem elektrisch autark ist.

Gemäß einer Weiterbildung der Erfindung wandelt der erfindungsgemäße Energieumformer aufgrund der Bewegung des Torblatts vorhandene mechanische Energie in elektrische Energie und ist eine elektromechanische Einrichtung, welche ebenfalls als Sensoreinheit arbeiten kann.

Diese erfindungsgemäße elektromechanische und elektrisch autarke Torblatteinrichtung weist somit mechanische Komponenten, welche in dem Energieumformer der Umwandlung von nichtelektrischer Energie in elektrische Energie dienen, sowie elektrische beziehungsweise elektronische Komponenten, die der Weiterverarbeitung und Kommunikation/Übertragung der erfassten betriebsrelevanten Parameter dienen, auf. Hierbei können vorzugsweise mikroelektromechanische Systeme, auch MEMS-Systeme bezeichnet, zum Einsatz kommen.

Der Energieumformer bei dieser Weiterbildung nutzt die mechanische Energie, die bei jedem Schließ- und Öffnungsvorgang des Torblatts und den damit einhergehenden Beschleunigungsvorgängen entsteht. Das Torblatt kann bei einem Schließ- und Öffnungsvorgang einen Hub von mehreren Metern bei einer Spitzengeschwindigkeit von beispielsweise 3 m/s ausführen. Die Kinetik der Bewegung ist dabei von der Höhe der abzudeckenden Toröffnung sowie dem jeweiligen Öffnungs- und Schließgrad abhängig. Ein Schließ- und Öffnungsvorgang kann die gesamte Toröffnung betreffen, kann aber auch nur teilweise ausgeführt werden und muss das Tor nicht bei jedem Vorgang komplett öffnen oder schließen. In jedem Fall wird das Torblatt aber durch die Antriebseinrichtung stark beschleunigt, das heißt, zunächst beispielsweise auf die Spitzengeschwindigkeit gebracht und dann wieder in den Stand abgebremst.

Da der Energieumformer in der Torblatteinrichtung des Torblatts angeordnet ist, bewegt sich der Energieumformer mit dem Torblatt mit und wird entsprechend stark beschleunigt. Je nach Einbauort der Torblatteinrichtung im Torblatt und der Ausgestaltung der Führungen des Tors kann die Bewegung der Torblatteinrichtung im Wesentlichen geradlinig sein und/oder einer Einwickelbewegung des Torblatts folgen.

Der Energieumformer kann beispielsweise entsprechend als ein Lineargenerator ausgebildet sein. Eine sich im Energieumformer befindende Masse wird aufgrund ihrer Trägheit bei einem Beschleunigung- und Verzögerungsvorgang des Torblatts und aufgrund der definierten Bewegung des Tors geradlinig ausgelenkt. Diese Auslenkung kann beispielsweise mittels des Induktionsprinzips oder des piezoelektrischen Prinzips in elektrischer Leistung resultieren.

So ist beispielsweise bei einem Lineargenerator, welcher nach dem Induktionsprinzip arbeitet, die Masse dabei regelmäßig ein Magnet, vorzugsweise ein Seltenerd-Magnet mit hoher Flussdichte. Die Masse beziehungsweise der Magnet wird sich dabei in einer oder auch mehreren Spulen bewegen. Durch die bei Beschleunigung des Tors verursachte Relativbewegung zwischen Masse und Spule wird mittels des Induktionseffekts eine Spannung erzeugt. Bei einem Lineargenerator ergibt eine einfache Abschätzung der bei Bewegung des Magneten prinzipiell erzeugbaren Spannungen nach dem Induktionsgesetz:

$$U = - d\emptyset/dt = - N * A * dB/dt, \qquad \text{(Gleichung 1)}$$

wobei ø der magnetische Fluss ist, A die Querschnittsfläche der Spule ist, B die magnetische Induktion ist, N die Zahl der Windungen der Induktionsspule ist, und dø/dt der Flussänderung in der Spule ist. Hierbei sind kurzzeitig induzierte Spannungen von einigen Volt erreichbar.

Die erzeugte Energie kann dann gemäß den folgenden Formeln:

$$E = L * I^2/2, \text{ mit} \qquad \text{(Gleichung 2)}$$

$$L = \mu_0 * N^2 * A/l \qquad \text{(Gleichung 3)}$$

für eine mit Luft gefüllte Spule errechnet werden, wobei L die Induktivität der Spule in der Einheit Henry, $\mu_0$ die magnetische Feldkonstante ist, A die Fläche der Spule ist, und 1 die Länge des Flusses in der Spule ist. Experimente zeigen, dass mit großzügig dimensionierten Spulen und Magneten kurzzeitige Stromflüsse von einigen 10 oder 100 mA möglich sind. Folglich können beispielsweise pro hub des Tors einige 10 mWs erzeugt werden. Ebenso kann der Fachmann den Lineargenerator mit Hilfe vorstehender Formeln und einiger Experimente entsprechend auslegen.

Dadurch, dass das Torblatt seinen Führungen folgen muss und entsprechend eine genau definierte Bewegung ausführen muss, kann der zumindest eine Freiheitsgrad f beziehungsweise die vorgesehenen Bewegungsmöglichkeiten der Masse und/oder des Magneten derart definiert werden, dass dieser mit zumindest einer der wesentlichen Beschleunigungsrichtungen des Torblatts zusammenfällt, damit der Energieumformer besonders wirksam tätig sein kann.

Vorzugsweise ist eine Masse schwingungsfähig an zumindest einer Feder aufgehängt, weist damit einen Freiheitsgrad von f = 1 (einen Translationsfreiheitsgrad) auf, und kann entsprechend entlang einer Gerade hin- und her bewegt werden.

Wenn sich also beispielsweise das Torblatt in seiner Führung geradlinig nach oben oder nach unten bewegt, ist der Energieumformer mit dem Magneten so angeordnet, dass sich der Magnet in dem Torblatt nach oben oder nach unten bewegen kann, wenn das Torblatt geöffnet oder geschlossen wird.

Dabei kann der Magnet beispielweise in einer Linearführung translationsfähig angeordnet sein.

Alternativ zu der Aufhängung an einer Feder kann der Magnet auch zwischen zwei hydraulischen oder mechanischen Stoßdämpfern angebracht sein, und sich zwischen diesen frei und geradlinig hin- und her bewegen.

Insbesondere können auch die Masse und dessen Aufhängung an die bekannte Kinetik der Bewegung des Torblatts derart angepasst sein, dass der Wirkungsgrad des Energieumformers optimiert ist. Beispielsweise können die Federkonstante(n) und die Masse bei vorstehend erläutertem Lineargenerator derart ausgelegt sein, dass die Masse bei einer üblichen Beschleunigung des Torblatts gerade innerhalb des idealen Arbeitsbereichs der Spule ausgelenkt ist, wobei vorzugsweise die Translation der Masse genauso groß ist, wie die Länge der Spule.

Da Industrietore hohe Spitzengeschwindigkeiten erreichen und bei einem Schließ-und Öffnungsvorgang und das Torblatt entsprechend hohen Beschleunigungen, welche zu einer Auslenkung einer Masse führen, unterliegt, ergibt sich gerade aus der Wandlung von mechanischer Energie, bei vorliegendem Beispiel kinetischer Energie, in elektrische Energie eine gute Energieausbeute. Bei jeder Bewegung des Torblatts wird somit für die vorgesehenen Verbraucher elektrische Energie erzeugt, die diese Energie auch regelmäßig bei Bewegung des Tors benötigen. Selbst nach langer Standzeit des Torblatts steht deshalb bei Verwendung des Tors, nämlich durch die anfängliche Beschleunigung des Torblatts, Energie zur Verfügung. Insofern wird die elektrische Energie bedarfsgerecht zur Verfügung gestellt.

Eine Batterie kann diese Anforderung aufgrund ihrer Selbstentladung nicht dauerhaft erfüllen. Der erfindungsgemäße Energieumformer, welcher die mechanische Energie des Torblatts zur Erzeugung elektrischer Energie verwendet, erhöht damit die Zuverlässigkeit des Betriebs.

Erfindungsgemäß weist der zuvor genannte Energieumformer ein mechanisches Energiespeicherelement, eine Feder mit einer definierten Federkonstante, und eine daran angebrachte schwingungsfähige Masse auf, wobei die (ruckartigen) Beschleunigungsbewegungen des Torblatts bei Betrieb beziehungsweise Bewegung des Torblatts, beispielsweise beim Öffnen oder Schließen, das Energiespeicherelement in eine (gedämpfte) oszillierende Schwingungen versetzen.

Ein mechanisches Energiespeicherelement ist erfindungsgemäß ein Element, welches die durch die Bewegung des Torblatts erzeugte und oft nur kurzzeitig verfügbare mechanische Energie über den Vorgang der Bewegung hinaus speichern und in Folge längerfristig verfügbar machen kann. Die zeitliche Dauer der Energieumwandlung von mechanischer in elektrische Energie kann durch das Speicherelement somit verlängert werden, was die Effizienz der Energieumwandlung verbessert.

Der Einsatz eines Energieumformers zur Umwandlung von mechanischer in elektrische Energie wird durch das Energiespeicherelement also zusätzlich begünstigt.

Als Energiespeicherelemente kommen beispielsweise Federn, Druckluftspeicher oder auch Schwungräder in Frage. Aufgrund der zumeist geradlinigen Beschleunigungsbewegung des Tors ist eine elastische Feder als Energiespeicherelement vorteilhaft, da diese entsprechend übereinstimmend mit ihrer Auslenkungsrichtung angeordnet werden kann. Als Federn kommen beispielsweise Linearfedern sowie Biege- oder Torsionsfedern in Frage.

Bei Beschleunigung wird eine elastische Feder durch die Trägheit einer an ihr befestigten Masse ausgelenkt. Die Federkraft wirkt der Auslenkung der Masse entgegen und versetzt die Masse in eine gedämpfte oszillierende Schwingung, welche zur Energieerzeugung ausgenutzt werden kann, welche auch fortdauern kann, wenn das Torblatt nicht mehr beschleunigt wird. Beispielsweise erfährt die Masse durch einen Öffnungs- oder Schließvorgang jeweils zweimal eine kurzzeitige Beschleunigung. Ist die Federkonstante nun darauf ausgelegt, dass jede dieser Bewegung ausreicht, die Masse in eine länger anhaltende oszillierende Schwingung zu versetzen, erhöht dies die Dauer des Energieumwandlungsvorgangs.

Gemäß einer Weiterbildung der Erfindung kann der Energieumformer derart eingerichtet sein, dass dieser auf dem Induktionsprinzip basiert.

Bei der elektromagnetischen Induktion entsteht eine elektrische Spannung bei einer Änderung der magnetischen Flussdichte, wie vorstehend schon näher erläutert wurde. Beispielsweise kann ein bewegter Magnet verwendet werden. Alternativ kann auch der Magnet feststehend ausgebildet sein, während sich der Leiter beziehungsweise die Spule bewegt.

Folglich ist der Energieumformer ein in sich geschlossenes, kompaktes System zur Erzeugung elektrischer Energie. Da der Energieumformer nur von der Bewegung beziehungsweise Beschleunigung des Torblatts und keinen weiteren Umgebungsparametern abhängig ist, kann der Energieumformer unabhängig von weiteren Vorrichtungen im Torblatt verbaut sein. Dabei sind aufgrund der Führung des Torblatts und der Art des Antriebs des Torblatts auch die mechanischen Rahmenbedingungen für den Einsatz eines elektromechanischen Energieumformers genau bekannt, weshalb der Energieumformer hierfür in seinem Aufbau optimiert sein kann.

Weiter werden auch weitere Hilfsvorrichtungen außerhalb des Torblatts, beispielsweise eine externe Induktionsspule zur elektrischen Energieeinkopplung, vermieden. Ein solcher Energieumformer nach dem Induktionsprinzip kann kompakt, robust und mit hoher Effizienz realisiert werden. Auch erhöht sich die Zuverlässigkeit der Torblatteinrichtung.

Alternativ kann der Energieumformer nach dem piezoelektrischen Prinzip arbeiten. Ein geeignetes piezoelektrisches Element kann beispielsweise ein üblicher elastischer Biegeschwinger in Form eines länglichen Blättchens sein, welcher an seinem einen Ende (zungenartig) aufgehängt ist, und welcher an seinem anderen freien Ende eine Masse aufweist. Bei Beschleunigung der Masse wird der Biegeschwinger in eine oszillierende Schwingung versetzt.

Auch bei dem piezoelektrischen Element ist die kompakte Bauweise des Energieumformers besonders vorteilhaft, da der Energieumformer unabhängig von anderen Umgebungsparametern als der Torblattbewegung elektrische Energie erzeugt.

Erfindungsgemäß ist der Energieumformer ein Lineargenerator und ein Freiheitsgrad der Masse des Energieumformers ist eins (f = 1). Dabei ist der Freiheitsgrad der Masse derart vorgesehen, dass dieser mit den wesentlichen Beschleunigungsrichtungen eines Abschlusselements des Torblatts übereinstimmt.

Der vorstehend erläuterte Energieumformer kann ein Thermo-/Spannungsumformer sein. Ein solcher Thermo-/Spannungsumformer ist ein thermoelektrischer Generator, der eine Temperaturdifferenz in elektrische Energie wandeln kann. Grundlage des thermoelektrischen Generators ist der Seebeck-Effekt, beziehungsweise der umgekehrte Peltier-Effekt, bei dem eine Temperaturdifferenz zu einer Spannung an zwei Elektroden führt, die auf gegenüberliegenden Seiten eines vorzugsweise plattenförmigen Elements angeordnet sind. Dabei werden beispielsweise Peltier-ähnliche-Elemente zwischen der ersten und der zweiten Seite des Torblatts in einer Lamelle montiert. Als Material können hier Halbleitermaterialien wie beispielsweise $Bi_2Te_3$, $PbTe$, $SiGe$, $BiSb$ oder $FeSi_2$ verwendet werden.

Der Wirkungsgrad eines solchen thermoelektrischen Generators (beziehungsweise Elements) kann als Verhältnis der abgegebenen elektrischen Leistung bezogen auf die zugeführte Wärmeenergie definiert werden. Der Wirkungsgrad ist von den Materialeigenschaften abhängig. Dies wird über die sogenannte thermoelektrische Effektivität Z beschrieben. Sie bedeutet, dass ein Material über vorteilhafte thermoelektrische Wandlereigenschaften verfügt, wenn das Produkt aus Seebeck-Koeffizient und elektrischer Leitfähigkeit hoch ist und gleichzeitig die Wärmeleitfähigkeit niedrig.

Wesentlich für die Größe des Wirkungsgrades ist der sogenannte ZT-Wert, der die Werkstoffeigenschaften im Hinblick auf die Temperaturrandbedingungen berücksichtigt. Der Wirkungsgrad nimmt mit steigendem ZT-Wert zu und strebt einem durch den Carnot-Wirkungsgrad definierten Grenzwert bei unendlich großem ZT zu. Vorzugsweise weist der erfindungsgemäße thermoelektrische Generator einen ZT-Wert von größer 1.2, vorzugsweise größer 1.5, auf.

Der Thermo-/Spannungsumformer ist derart angeordnet, dass dieser die Temperaturdifferenz zwischen der ersten und der zweiten Seite des Torblatts zum Erzeugen elektrischer Energie nutzt, wobei die erste Seite die im Gebäude gelegene Seite des Torblatts und die zweite Seite die außerhalb des Gebäudes gelegene Seite ist. Ein übliches Einzelelemente des Torblatts besteht aus einem metallischen Werkstoff, beispielsweise Aluminium, und ist ein rechteckförmiges Hohlprofil. Deshalb kann der Thermo- /Spannungsumformer im Inneren des Hohlraums des Einzelelements des Torblatts mit seinen thermisch aktiven Flächen (d.h., zwischen einer Wärmequelle und einer Wärmesenke) so angeordnet sein, dass die eine Fläche thermisch leitend mit der entsprechenden ersten Innenfläche des Torblatts verbunden ist, und dass die andere Fläche thermisch leitend mit der zur ersten Innenfläche gegenüberliegenden zweiten Innenfläche des Torblatts verbunden ist. Dabei ist die erste Innenfläche des Hohlprofils vorzugsweise in Richtung der Gebäudeaußenseite und die zweite Innenfläche des Hohlprofils in Richtung der Gebäudeinnenseite oder umgekehrt angeordnet, da dort der größte Temperaturunterschied herrscht, wodurch die Energiewandlungseffizienz des Energieumformers verbessert wird. So wird die übliche Einbauposition eines erfindungsgemäßen Tors als Gebäudeabschluss oder alternativ auch als Trennung zu einem Kühllager vorteilhaft ausgenutzt, um ausreichend Leistung für eventuelle permanente Verbraucher in der Torblatteinrichtung mittels eines Thermo- /Spannungsumformer zur Verfügung stellen zu können, da die durchschnittlichen Energieerzeugungswerte des Energieumformers (über längere Zeiträume gemittelt) vorabgeschätzt werden können.

Weiter kann die Torblatteinrichtung zumindest eine Sensoreinheit aufweisen. Damit kann eine "intelligente" Torsteuerung umgesetzt werden, wobei das Tor bzw. die Torsteuereinrichtung und/oder die Torblatteinrichtung intelligent auf die jeweiligen Umwelt- und/oder Einsatzbedingungen reagieren kann. So sind entsprechende beispielhafte Weiterbildungen betreffend eine intelligente Torsteuerung nachstehend näher erläutert.

Gemäß einer Weiterbildung der Erfindung kann das Torblatt ein Abschlusselement aufweisen, wobei die Sensoreinheit einen Kollisionssensor aufweist, der im Abschlusselement angeordnet ist.

Ein erfindungsgemäßes Abschlusselement ist an dem Ende des Torblatts, das in geschlossener Position am bodennächsten ist, ausgebildet. Dies kann beispielsweise die unterste (oder letzte) Lamelle des Torblatts, das sogenannte Abschlussschild sein. Das Abschlusselement ist häufig mit einem Hohlraum ausgebildet. Erfindungsgemäß kann ein Kollisionssensor in einem derartigen Hohlraum des Abschlusselements angeordnet sein.

Derartige Kollisionssensoren können feststellen, ob das Torblatt eine Kollision beziehungsweise einen Zusammenstoß erfahren hat, also, ob das Torblatt "gecrasht" wurde. Folgen eines solchen Zusammenstoßes können sein, dass Personen und/oder Objekt schützende Maßnahmen zu ergreifen sind. Kollisionssensoren können aber auch bevorstehende Kollisionen detektieren (beispielsweise kapazitiv) und damit Kollisionen verhindern helfen.

Dies führt zu geringeren Ausfall- und Standzeiten des Tors und damit zu einem optimierten Betrieb.

Gemäß einer Weiterbildung der Erfindung wird der Kollisionssensor erfassen, ob das Torblatt einen Zusammenstoß mit einem Hindernis hatte. Anschließend überträgt die Torblatteinrichtung im Falle eines Zusammenstoßes die Information über den Zusammenstoß an die Torsteuereinrichtung, wodurch die Torsteuereinrichtung geeignet reagieren kann.

Gemäß einer Weiterbildung der Erfindung kann das Torblatt eine mechanische oder elektrische Verriegelung aufweisen und die Sensoreinheit einen Verriegelungssensor aufweisen, der den Verriegelungszustand der mechanischen oder elektrischen Verriegelung erfasst.

Das Torblatt kann zwischen einem nicht-verriegeltem Zustand und einem verriegeltem Zustand wechseln. Die Verriegelung kann von einer Person manuell mit Hilfe eines Schlüssels aber auch elektrisch durchgeführt werden. Nach der Verriegelung des Torblatts ist üblicherweise eine Ansteuerung der Antriebsvorrichtung des Torblatts nicht mehr möglich. Die Verriegelung schützt etwa den durch das Tor getrennten Raum vor unbefugten Zugriffen.

Ein Verriegelungssensor kann den Zustand der mechanischen Verriegelung erfassen. Die Erfassung ist über eine Reihe von Signalen, wie beispielsweise optische oder piezoelektrische Signale möglich. Die zuverlässige Funktion des Verriegelungssensors muss in allen Situationen zur Verfügung stehen. In Notfallsituationen, wie einem Brandfall, ist die zuverlässige Funktion des Verriegelungssensors sicherheitsrelevant.

Der Verriegelungssensor ist als Teil der elektrisch autarken Torblatteinrichtung ausgebildet. Damit ist die Versorgung des Verriegelungssensors unabhängig von einer externen Versorgung. Durch diese unabhängige Versorgung durch den Energieumformer in der Torblatteinrichtung selbst können externe Fehlerquellen, wie Kabelbrüche oder Manipulationen, vermieden werden. Durch die besondere Eigenschaft des Energieumformers und den elektrisch autarken Betrieb der Torballeinrichtung können zudem Ausfälle einer Stromversorgung, wie sie beispielsweise bei leeren Batterien vorkommen, ausgeschlossen werden. Somit verbessert sich die Zuverlässigkeit des Tors.

Gemäß einer Weiterbildung der Erfindung kann die Sensoreinheit Temperatursensoren, welche die Temperaturdifferenz zwischen der ersten und der zweiten Seite des Torblatts erfassen, und/oder Außentemperatursensoren und/oder Beschleunigungssensoren zur Erfassung der Bewegungsrichtung des Tors und dessen Beschleunigung aufweisen.

Als Temperatursensoren können beispielsweise Bauteile, die je nach Temperaturänderung ihren Widerstand verändern, verwendet werden. Beispiele für derartige Temperatursensoren sind ein Thermistor oder ein PT100-Sensor. Häufig sind die bei Industrietoren verwendeten Lamellen thermisch isoliert ausgeführt. Dadurch ist ein einfaches Abgreifen der Temperatur an den gegenüberliegenden Metallseiten innerhalb einer Lamelle möglich. Da Metall regelmäßig gut wärmeleitend ist, können die Umgebungstemperaturen genau erfasst werden. Werden an der nach außen liegenden Seite in einer Lamelle sowie an der nach innen liegenden Seite in einer Lamelle die Temperaturen erfasst, kann hieraus eine Temperaturdifferenz zwischen der ersten und zweiten Seite des Torblatts berechnet werden. Dies erlaubt Rückschlüsse beispielsweise über die Qualität der thermischen Isolation durch das Tor oder dessen Öffnungszustand. Je nach Temperaturdifferenz kann die Torsteuerung also Rückschlüsse über den tatsächlichen Öffnungszustand ziehen und so kann die Torsteuerung entsprechende Programmroutinen ausführen. Beispielsweise kann die Torsteuerung erfassen, dass sich das Positioniersystem "verzählt" hat bzw. falsch positioniert ist, wenn die Temperaturdifferenz zu klein ist, d.h., das Tor offen ist, obwohl es vollständig geschlossen sein sollte. In diesem Falle können entsprechende Gegenmaßnahmen, beispielsweise entsprechende Hinweise an das Wartungspersonal, eingeleitet werden.

Alternativ kann die Temperatur auch nur an einer Seite des Torblatts erfasst werden. Beispielsweise kann zumindest ein Außentemperatursensor an der nach außen liegenden Seite in der Lamelle zur Erfassung der Außentemperatur(en) vorgesehen sein.

Ebenso kann zusätzlich oder alternativ zu oben genannten Temperatursensoren ein Beschleunigungssensor an der Torblatteinrichtung angeordnet sein. Der Beschleunigungssensor erfasst eine Beschleunigung des Torblatts und kann somit die Bewegung des Torblatts nachvollziehen. Die Beschleunigungserfassung erfolgt meist mit Hilfe einer Testmasse. Je nach der auf die Testmasse wirkenden Trägheitskraft kann die Beschleunigung berechnet werden. Beispielsweise kann eine durch die Trägheitskraft der Testmasse erzeugte dynamische Druckschwankung durch piezokeramische Sensorplatten erfolgen, welche die Druckschwankung in elektrische Signale umwandeln. Weiter können auch Dehnungsmessstreifen sowie Beschleunigungssensoren ohne Testmasse, wie ein Ferraris-Sensor, Anwendung finden. Die Beschleunigung des Torblatts ist ein Indikator für den Gesamtzustand des Tors, beispielsweise für den Zustand der Rollen eines Rolltors, und kann ausgewertet werden, um Verschleißerscheinungen bei dem Tor zu erkennen. Im Detail lässt die von dem Torblatt erreichte und sensorisch erfasste Beschleunigung Rückschlüsse über den Gesamtzustand des Tors zu. Ursache für einen zu geringen Beschleunigungswert könnte ein beschädigtes Tor sein, das nur unzureichend instandgesetzt wurde. Ebenso könnte der Rollmechanismus eines Rolltors beschädigt sein, wodurch das Torblatt verklemmt. Denkbar ist auch ein Verbrauch der Schmiermittel in den seitlichen Führungen, was zu einem größeren Widerstand der Bewegung des Torblatts und demzufolge zu einem Schleifen der Torblatts führt.

Alle der oben genannten Sensoren können in der Torblatteinrichtung selbst angeordnet sein. Diese kompakte Bauweise ist nicht nur platzsparend, durch den Einbau der Temperatursensoren sowie des Beschleunigungssensors innerhalb einer Lamelle sind diese zudem vor äußerer Krafteinwirkung geschützt. Die Funktion der Sensoren kann damit zuverlässig gewährleistet werden.

Gemäß einer Weiterbildung der Erfindung kann die durch die Temperatursensoren gemessene Temperaturdifferenz von der Torblatteinrichtung an die Torsteuereinrichtung übertragen werden, welche damit die Dichtigkeit des Tors beziehungsweise die Qualität des Abschlusses des Gebäudes durch das Tor beurteilt.

Durch die beispielsweise an gegenüberliegenden Seiten einer Lamelle angeordneten Temperatursensoren kann durch die thermisch getrennten Lamellen zuverlässig die Umgebungstemperatur an zwei Seiten des Torblatts erfasst werden. Die erfassten Temperaturen können über eine Kommunikation/Übertragung zwischen der Sendeeinheit der Torblatteinrichtung an die Empfangseinheit der Torsteuereinrichtung übertragen werden. Die Temperaturwerte können anschließend an der Torsteuereinrichtung verarbeitet und eine Temperaturdifferenz gebildet werden. Auf Basis dieser Temperaturdifferenz kann die Torsteuereinrichtung Rückschlüsse über die Dichtigkeit des Tors ziehen.

Beispielsweise kann die Temperaturdifferenz mit zumindest einem statischen oder dynamischen (beispielsweise jahreszeitabhängigen) Schwellwert verglichen werden. Wird der Schwellwert unterschritten und ist das Tor geschlossen, so kann vermutete werden, dass das Tor undicht ist. Umgekehrt kann beispielsweise durch den Vergleich mit dem Schwellwert ermittelt werden, dass das Torblatt tatsächlich nicht vollständig geschlossen ist, obwohl dies der Fall sein müsste. Damit ist ein zusätzlicher Parameter zur Überwachung des Betriebs des Tors verfügbar

Mithilfe dieser Überprüfung des Schließzustandes des Tors können Energieverluste, die beispielsweise als Wärmeverluste im Winter entstehen, vermieden werden. Durch die Auswertung derartiger Temperatursensoren können somit unnötige Kosten vermieden werden.

Gemäß einer Weiterbildung der Erfindung kann die durch den Außentemperatursensor gemessene Außentemperatur durch die Torblatteinrichtung an die Torsteuereinrichtung übertragen werden, welche mittels eines Vergleichs des voreingestellten Schwellwerts mit der gemessenen Außentemperatur zwischen einem Sommer- und einem Winterbetrieb umschaltet, wobei das Tor im Sommerbetrieb nicht vollständig geschlossen wird.

Somit können aus der gemessenen Außentemperatur Rückschlüsse auf die Jahreszeit gezogen werden. Beispielsweise wird die Veränderung der Außentemperatur über einen längeren Zeitraum, etwa mehrere Monate, gespeichert, um so eine Ermittlung der aktuellen Jahreszeit unabhängig von gemessenen Spitzenwerten zuverlässig treffen zu können. Wird etwa ermittelt, dass ein Sommerbetrieb vorliegt, kann die Torsteuereinrichtung automatisch veranlassen, dass das Torblatt nicht vollständig geschlossen wird. Durch ein nicht vollständig geschlossenes Torblatt kann die Lüftung im Inneren einer Halle unterstützt werden. Hierdurch können die Arbeitsbedingungen im Halleninneren verbessert, sowie Kosten für eine Lüftung reduziert werden. Ein derartiges Tor kann somit die Unterscheidung zwischen Sommer- und Winterbetrieb selbstständig treffen: ein Bedienereingriff zur Umschaltung der Betriebsarten ist somit nicht erforderlich.

Ein derartiges Tor kann die Unterscheidung zwischen Sommer- und Winterbetrieb selbstständig treffen, wobei ein manueller Bedienereingriff unnötig wird. Damit werden Arbeitskraftressourcen gespart und nicht nur ein kostensparender Betrieb, sondern auch ein sofortiges Regeln der Torblattöffnung abhängig von Außentemperaturen möglich.

Gemäß einer Weiterbildung der Erfindung können die durch den Beschleunigungssensor gemessenen Werte durch die Torblatteinrichtung an die Torsteuereinrichtung übertragen werden, wobei die Torsteuereinrichtung durch einen Vergleich der Beschleunigungswerte mit zumindest einem voreingestellten ersten Beschleunigungsschwellwert beurteilt, ob das Tor beschädigt beziehungsweise verschlissen ist.

Die von dem Torblatt erreichte und sensorisch erfasste Beschleunigung lässt also Rückschlüsse auf den Gesamtzustand des Tors zu. Ursache für einen zu geringen Beschleunigungswert könnte ein beschädigtes Tor sein, das nur unzureichend instandgesetzt wurde. Ebenso könnte der Rollmechanismus eines Rolltors beschädigt sein, wodurch das Torblatt verklemmt. Denkbar ist auch ein Verbrauch der Schmiermittel in den seitlichen Führungen, was zu einem größeren Widerstand der Bewegung des Torblatts und demzufolge zu einem Schleifen der Torblatts führt.

Kann eine solche Beschädigung beziehungsweise ein solcher Verschleiß des Tors erfasst werden, können entsprechende Gegenmaßnahmen eingeleitet werden. Beispielsweise können durch die Torsteuereinrichtung Wartungshinweise ausgegeben werden. Dadurch können weiterfressende Schäden am Torblatt vermieden werden, welche zu weiteren Standzeiten des Torblatts führen würden.

Gemäß einer Weiterbildung der Erfindung können die durch den Beschleunigungssensor gemessenen Werte durch die Torblatteinrichtung an die Torsteuereinrichtung übertragen werden, wobei die Torsteuereinrichtung durch einen Vergleich der Beschleunigungswerte mit zumindest einem voreingestellten zweiten Beschleunigungsschwellwert beurteilt, ob unzulässige Benutzereinstellungen vorgenommen worden sind.

Durch einen Vergleich des gemessenen Beschleunigungswertes mit einem zweiten voreingestellten Beschleunigungswert kann beispielsweise die Geschwindigkeitseinstellung der maximal zulässigen Torblattgeschwindigkeit überprüft werden. Durch diesen Vergleich können solche unzulässige Geschwindigkeitseinstellungen identifiziert werden, welche beispielsweise zu einem Überspringen von Antriebsriemen führen können, was ein Sicherheitsrisiko darstellt.

Der voreingestellte zweite Beschleunigungswert kann zuvor durch Experimente oder Simulationen unter Berücksichtigung von Sicherheitsfaktoren vorab ermittelt / errechnet werden.

Zu hohe Geschwindigkeiten des Torblatts wirken sich auch auf die Lebensdauer des Tors aus. Demnach führen zu harte Bremsraten, beziehungsweise zu schnelle Abbremsvorgänge, zu einem erhöhten Verschleiß der Bauteile. Durch ein Erfassen der aktuellen Beschleunigung und einen Vergleich mit einem voreingestellten zweiten Beschleunigungsschwellwert kann daher die Ausfallwahrscheinlichkeit des Tors reduziert und ein optimierter Betrieb des Tors gewährleistet werden.

Gemäß einer Weiterbildung der Erfindung können die durch den Beschleunigungssensor gemessenen Werte durch die Torblatteinrichtung an die Torsteuereinrichtung übertragen werden, wobei die Torsteuereinrichtung durch einen Vergleich der Beschleunigungswerte mit zumindest einem voreingestellten dritten Beschleunigungsschwellwert beurteilt, ob das Tor abstürzt oder nicht.

Durch einen Ausfall eines Sicherungselementes oder eine falsche Steuereingabe kann es vorkommen, dass das Tor unkontrolliert herabfällt. Ein derartiges Abstürzen stellt für Objekte besonders aber für Personen eine Gefahr dar. Durch einen Vergleich der durch den Beschleunigungssensor erfassten Beschleunigung mit einem voreingestellten dritten Beschleunigungsschwellwert kann ein Abstürzen des Torblatts erkannt werden.

Wird ein Abstürzen des Torblatts erkannt, können weiter Gegenmaßnahmen eingeleitet werde. Beispielsweise kann ein NOT-STOPP Mechanismus ausgelöst werden. Dabei veranlasst die Torsteuereinrichtung etwa, dass die Antriebseinrichtung die Bewegung des Torblatts sofort anhält und die aktuelle Position beibehält. Durch eine derartige Absturzsicherung können Personen- und Objektunfälle verhindert werden.

Die Torsteuereinrichtung kann aber auch autark beziehungsweise selbstständig agieren, beispielsweise durch eine Aktoreinheit innerhalb des Abschlussschildes oder bei einem Anwendungsfall der notfallgemäßen Abbremsung beziehungsweise dem NOT-STOPP des Torblatts. Eine Realisierung dieser notfallgemäßen Abbremsung könnte per durch Federn mechanisch vorgespannte Bolzen erfolgen, welche im Notfall durch Entriegeln in die Zargen eingreifen und dort zur Verrastung und somit zum sofortigen Stopp des frei fallenden Torblatts führen. Diese Bolzen werden vorzugsweise beidseitig am Torblatt benachbart zu den Torblattführungen montiert.

Gemäß einer Weiterbildung der Erfindung kann das Tor ferner eine Energiespeichereinheit zum Speichern der vom Energieumformer erzeugten elektrischen Energie; und/oder eine Energiemanagementeinheit zum Verwalten vom Energieumformer erzeugten Energie; und/oder eine Recheneinheit, wobei die Recheneinheit optional eine Signalverarbeitungseinheit aufweist; und/oder vorzugsweise zumindest eine Aktoreinheit aufweisen.

Ein Speicherelement im Sinne der Erfindung speichert die vom Energieumformer erzeugte elektrische Energie, so dass diese auch in Phasen zur Verfügung steht, in denen der Energieumformer keine Energie umwandelt. Als Speicherelement können elektrochemische Kondensatoren wie Superkondensatoren, auch als "Goldcaps" bezeichnet, verwendet werden.

Eine erfindungsgemäße Energiemanagementeinheit verwaltet die vom Energieumformer erzeugte Energie derart, dass je nach Bedarf und Ladezustand das Speicherelement mit der erzeugten elektrischen Energie vom Energieumformer geladen wird. Entsprechend kann die Energiemanagementeinheit Verbraucher zu- oder abschalten.

Eine erfindungsgemäße Recheneinheit der Torblatteinrichtung wandelt die sensorisch erfassten physikalischen Größen in betriebsrelevante Parameter um. Beispielsweise wird der Widerstand eines PT100-Temperatursensors beziehungsweise die gemessene Spannungsdifferenz in eine Temperatur mit der Einheit Grad Celsius umgerechnet. Im Hinblick auf einen Beschleunigungssensor kann die Recheneinheit beispielsweise nur den Spitzenwert der Beschleunigung herausfiltern und diesen an die Torsteuereinheit übertragen, um Energie zu sparen.

Gemäß einer Weiterbildung der Erfindung kann die Torblatteinrichtung, bestehend aus den Komponenten des Energieumformers, der Energiemanagementeinheit, der Energiespeichereinheit, der Recheneinheit, der Sensoreinheit und der optionalen zumindest einen Aktoreinheit eine energetisch autarke Systemeinheit ausbilden, wobei die umgewandelte und gespeicherte Energie zum Betreiben dieser Komponenten verwendet wird, ohne, dass eine externe Energiezufuhr erforderlich ist. Diese Systemeinheit kann vorzugsweise eine eigenständige beziehungsweise selbstständige Regelschleife oder Reaktionssystematik aufweisen, welche unabhängig von weiteren Komponenten außerhalb des Torblatts tätig ist.

Gemäß einer Weiterbildung der Erfindung kann die Torblatteinrichtung mit der zumindest einen Aktoreinheit auf eine von den Sensoren gewonnene Information auch ohne ein Zusammenwirken mit der Antriebseinheit (d.h., selbstständig) eine Aktion ausführen. Die zumindest eine Aktoreinheit kann dabei beispielsweise eine LED-Anzeige, einen Magnetauslöser, oder einen kleinen elektrischen Stellmotor bilden. Durch diese in sich energetisch autarke und selbstständig agierende Einrichtung wird die Unabhängigkeit von externen Einflüssen erhöht, wodurch der Einfluss von externen Störeinflüssen auf die Ausführbarkeit bestimmter, durch die zumindest eine Aktoreinheit erreichter, Aktionen minimiert und somit die Zuverlässigkeit und Sicherheit des Systems erhöht wird. Beispielsweise werden Funkstörungen unerheblich und Reaktionszeiten kürzer.

Gemäß einer Weiterbildung der Erfindung kann die Torblatteinrichtung eine integrierte Baugruppe ausbilden und/oder die Torblatteinrichtung in einem Abschlusselement des Torblatts angeordnet sein.

Erfindungsgemäß besteht die integrierte Baugruppe aus zumindest einer Sensoreinheit, dem Energieumformer sowie einer zweiten Sende- und Empfangseinheit beziehungsweise zumindest einer Aktoreinheit. Durch einen integrierten Aufbau dieser Elemente bildet die Torblatteinrichtung eine kompakte Systembaugruppe. Durch das integrierte Anordnen aus zumindest diesen drei beziehungsweise zumindest vier Elementen kann die Torblatteinrichtung elektrisch autark fungieren. Hierdurch sind nur geringe Übertragungswege beziehungsweise Leitungslängen im Torblatt notwendig, wodurch die Fehleranfälligkeit der Torblatteinrichtung reduziert werden kann.

Des Weiteren kann die oben genannte autarke und selbstständige Einheit ein abstürzendes Torblatt detektieren und entsprechende NOT-STOPP Sequenzen einleiten. Dies kann vorzugsweise durch selbstständiges Aktivieren, von beispielsweise mechanisch vorgespannten Bolzen, welche von der Torblatteinrichtung direkt und autark entriegelt werden und somit den Absturz des Torblatts verhindern beziehungsweise stoppen, realisiert werden.

Weiter kann die gesamte Torblatteinrichtung zudem in einem Abschlusselement des Torblatts angeordnet sein, also dort, wo beispielsweise auch die Kollisionssensoren angeordnet sind.

Gemäß einer Weiterbildung der Erfindung kann die Torsteuereinrichtung ortsfest angeordnet sein und/oder die erste Kommunikationseinheit eine erste Sende- und Empfangseinheit umfassen; und die zweite Kommunikationseinheit eine zweite Sende-und Empfangseinheit umfassen.

Gemäß einer Weiterbildung der Erfindung kann die Torblatteinrichtung den Verriegelungszustand der mechanischen oder elektrischen Verriegelung an die Torsteuereinrichtung übertragen.

Auf Basis der übertragenen Informationen über den mechanischen Verriegelungszustand kann die Torsteuereinrichtung die Antriebseinrichtung zum Bewegen des Torblatts ansteuern. Überträgt die zweite Sende- und Empfangseinheit etwa ein Signal, dass das Torblatt mechanisch oder elektrisch verriegelt ist (beispielsweise mittels eines Kippschalters am Tor), kann die Antriebseinrichtung in einen Ruhezustand versetzt werden. Damit wird die Antriebseinrichtung nicht aktiv, wenn das Tor mechanisch verriegelt ist.

Gemäß einem anderen Aspekt der Erfindung ist ein Verfahren für ein Tor, insbesondere ein schnelllaufendes Industrietor vorgesehen, das ein Umwandeln von nicht elektrischer Energie in elektrische Energie mittels eines Energieumformers einer in einem Torblatt des Tors angeordneten Torblatteinrichtung; ein Speichern der elektrischen Energie in einem Speicherelement der Torblatteinrichtung; ein Erfassen von zumindest einer physikalischen Größe durch eine Sensoreinheit der Torblatteinrichtung basierend auf der gespeicherten elektrischen Energie; und ein Übertragen der erfassten physikalischen Größe durch eine Sendeeinheit der Torblatteinrichtung an eine (vorzugsweise ortsfeste) Torsteuereinrichtung, welche zum Ansteuern einer Antriebseinrichtung des Tors vorgesehen ist, aufweist.

Der in der Torblatteinrichtung angeordnete Energieumformer wandelt aus der Umgebung als nicht elektrische Energie frei verfügbare Energie in elektrische Energie. Da der Energieumformer im Torblatt angeordnet ist, stehen ihm beispielsweise die Bewegungsenergie des Torblatts oder auch eine Temperaturdifferenz zwischen einer ersten und einer zweiten Seite des Torblatts zur Verfügung.

Ein ebenso in der Torblatteinrichtung angeordnetes Speicherelement speichert anschließend die durch den Energieumformer erzeugte elektrische Energie. Das Speicherelement ist in unmittelbarer Nähe zu dem Energieumformer angeordnet.

Da der Energieumformer, das Speicherelement, die Sensoreinheit sowie die Sende-und Empfangseinheit Elemente der Torblatteinrichtung sind, sind diese benachbart zueinander angeordnet. Damit finden die einzelnen Schritte des Verfahrens in strukturell aneinander angeordneten Elementen statt. Daraus ergibt sich eine Synergie zwischen Ablauf und Anordnung. Das Verfahren realisiert die gleichen Vorteile, welche vorstehend in Bezug auf das Tor beschrieben worden sind.

Gemäß einer Weiterbildung der Erfindung ist die erfasste physikalische Größe zumindest eine Temperatur an dem Torblatt und/oder eine Beschleunigung des Torblatts und/oder eine Position eines mechanischen Elements, die Aufschluss über den Verriegelungszustand des Tors gibt.

Die erfasste physikalische Größe ist eine Größe, welche Aufschluss über einen Zustand des Tors gibt. Sie hilft dabei sicherheitskritische oder funktionsrelevante Parameter des Tors zu überprüfen, die für einen zuverlässigen und optimierten und schließlich kostensparenden Betrieb notwendig sind, so wie dies vorstehend in Bezug auf die entsprechenden Einrichtungen am Tor beschrieben worden ist.

Gemäß einem anderen Aspekt der Erfindung wird die Verwendung eines Energieumformers zur Umwandlung von nicht elektrischer Energie in elektrische Energie zur Energieversorgung einer in einem Torblatt eines Tors angeordneten Torblatteinrichtung mit einer Sensoreinheit zum Erfassen zumindest einer physikalischen Größe offenbart.

Vorstehend wurde ein Tor beschrieben, welches eine intelligente und elektrisch vollständig autarke Torblatteinrichtung aufweist. Damit ist eine Fremdversorgung der Torblatteinrichtung, beispielsweise über Kabel, überflüssig.

Die erfindungsgemäße Torblatteinrichtung erlaubt es, in einer zuverlässigen Art und Weise vorteilhafte sensorische Funktionen auszuführen, welche den Betrieb des Tors optimieren bzw. "intelligent" ausgestalten.

Gemäß einem anderen Aspekt der Erfindung können alle vorstehend erläuterten Funktionen der Torblatteinrichtung und der Torsteuereinrichtung auch mittels einer Fremdversorgung oder mittels der Unterstützung durch Fremdversorgung, d.h., nicht energetisch autark, erfolgen. Beispielsweise kann die Torblatteinrichtung eine Batterie, eine induktive Fremdversorgung oder eine Versorgung mittels Schleppkabel aufweisen.

Gemäß diesem anderen Aspekt der Erfindung ist ein Tor, insbesondere ein schnelllaufendes Industrietor vorgesehen, aufweisend ein Torblatt, welches in seitlichen Führungen geführt ist, und welches eine Toröffnung abdeckt, und welches eine erste und eine zweite Seite aufweist; und eine Antriebseinrichtung zum Bewegen des Torblatts zwischen einer Öffnungs- und Schließstellung; und eine Torsteuereinrichtung zum Ansteuern der Antriebseinrichtung, wobei die Torsteuereinrichtung eine erste Kommunikationseinheit aufweist; eine in dem Torblatt angeordnete Torblatteinrichtung; und zumindest eine Aktoreinheit, wobei die Torblatteinrichtung das Folgende aufweist: zumindest eine Sensoreinheit zum Erfassen zumindest einer physikalischen Größe; und eine zumindest teilweise externe Energieversorgung; und eine zweite Kommunikationseinheit, wobei die erste und die zweite Kommunikationseinheit miteinander drahtlos kommunizieren. Die Torsteuereinrichtung und/oder die Torblatteinrichtung beinhalten zumindest eine Funktionalität (siehe beispielsweise die vorstehenden Erläuterungen), welche eine intelligente Torsteuerung realisiert.

Dabei wird vorzugsweise mittels der zumindest einen Sensoreinheit zumindest eine physikalische Größe erfasst, welche durch die Torsteuereinrichtung und/oder die Torblatteinrichtung weiterverarbeitet wird/werden, wobei dies eine entsprechende Reaktion der Aktoreinheit und/oder der Torsteuereinrichtung verursacht.

Das erfindungsgemäße Tor wird nachfolgend in Ausführungsbeispielen anhand der Figuren der Zeichnung näher erläutert: Es zeigt:

Fig. 1    eine Vorderansicht eines erfindungsgemäßen Rolltors 1;

Fig. 2    eine Prinzipdarstellung eines Steuersystems für ein Tor, aufweisend eine Torblatteinrichtung 20, eine Torsteuereinrichtung 5, sowie eine Antriebseinrichtung 4;

Fig. 3    eine Prinzipdarstellung von Baugruppen der in Fig. 1 dargestellten elektrischen Torblatteinrichtung 20;

Fig. 4    einen Energieumformer 21 gemäß einem Aspekt der Erfindung;

Fig. 5     einen Energieumformer 21 gemäß einem anderen Aspekt der Erfindung;

Fig. 6     einen Energieumformer 21 gemäß einem weiteren Aspekt der Erfindung.

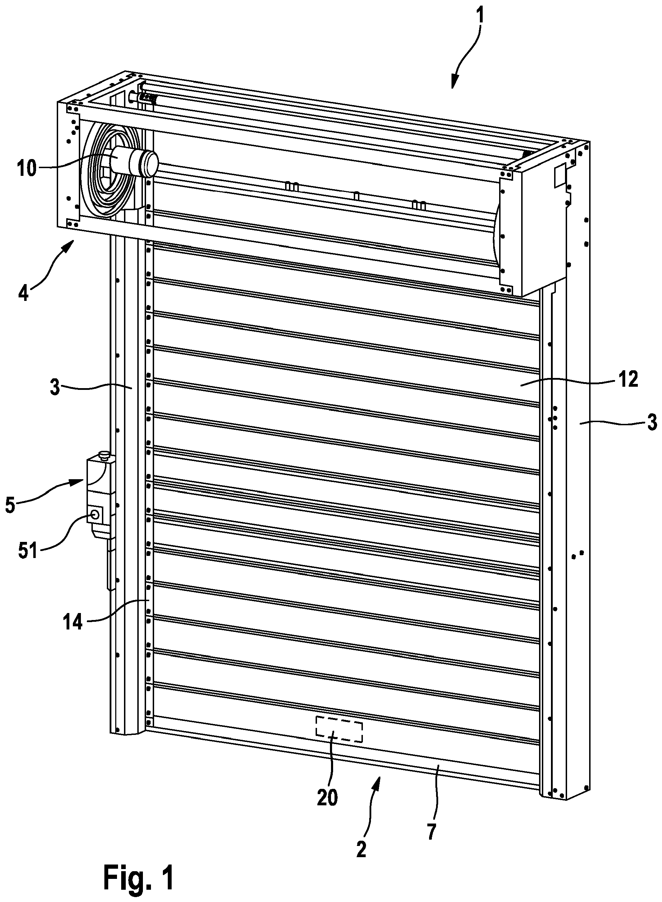

Fig. 1 zeigt eine Vorderansicht eines erfindungsgemäßen Rolltors 1. Gemäß der Darstellung in Fig. 1 weist das Rolltor 1 ein Torblatt 2 auf, welches in seitlichen Führungen 3 gehalten wird und eine Mehrzahl von Lamellen 12 umfasst, welche sich senkrecht zu den Führungen 3 über eine Toröffnung erstrecken.

Das Torblatt 2 kann zudem Scharnierbänder 14 aufweisen, welche eine Mehrzahl von Scharniergliedern umfassen. Jeweils zwei einander zugeordnete Scharnierglieder können dabei durch ein quer zu den seitlichen Führungen 3 verlaufendes Versteifungsprofil derart miteinander verbunden sein, dass die Scharnierbänder 14 mit den Versteifungsprofilen ein stabiles, abwinkelbares Gerüst bilden.

Alternativ zu den Lamellen 12 kann das Torblatt 2 Segmente umfassen, welche, ohne eingerollt zu werden, in einem Schienensystem oberhalb des Tors 1, beispielsweise an einer Decke, geleitet werden können. Weiter kann das Torblatt 2 als Torbehang aus flexiblem PVC (Polyvinylchlorid) mit einer Abschlussleiste ausgebildet sein. Bei Verwendung von Acrylglas kann das Torblatt 2 auch durchsichtig ausgestaltet sein. Da das Tor 1 als Innen- oder Außentor ausgebildet sein kann, kann das Torblatt 2 auch Fenster oder Türen umfassen.

Ferner weist das Torblatt 2 ein Abschlusselement 7 auf, welches bodenseitig mit einer Gummidichtung oder dergleichen versehen ist. Das Abschlusselement 7 sowie die Scharnierglieder sind dabei koaxial zu Schwenkachsen der Scharnierglieder verschwenkbar. In dem Abschlusselement 7 befindet sich eine Torblatteinrichtung 20.

Das Torblatt 2 wird über einen Motor 10 der in Fig. 1 dargestellten Antriebseinrichtung 4, der die Motorleistung mittels einer Antriebswelle in an sich bekannter Weise überträgt, angetrieben. Die Motorleistung ist dabei derart dimensioniert, das sich das Rolltor 1 schnell (> 1 m/s, vorzugsweise > 2 m/s) öffnen und schließen kann.

Befindet sich das Rolltor 1 in dem geschlossenen Zustand, so ist das Abschlusselement 7 mit einem bodenseitigen Element des Rolltors 1 in Kontakt. In diesem Zustand ist die thermisch trennende Wirkung beziehungsweise die Dichtheit des Rolltors 1 am größten, so dass ein Luftaustausch zwischen der ersten und der zweiten Seite des Rolltors 1 weitgehend oder vollständig unterbunden wird. Im vollständig geöffneten Zustand ist die von dem Rolltor 1 freigegebene Fläche der Toröffnung maximal. Das Rolltor 1 kann aber auch, entsprechend der Programmierung der Torsteuereinrichtung 5, jeden anderen Zustand zwischen dem geschlossenen und geöffneten Zustand annehmen. Die Torsteuereinrichtung kann dabei ein Bedienelement oder ein Bedienfeld 51 aufweisen, mittels welchem ein Nutzer die Torsteuereinrichtung 5 bedienen kann.

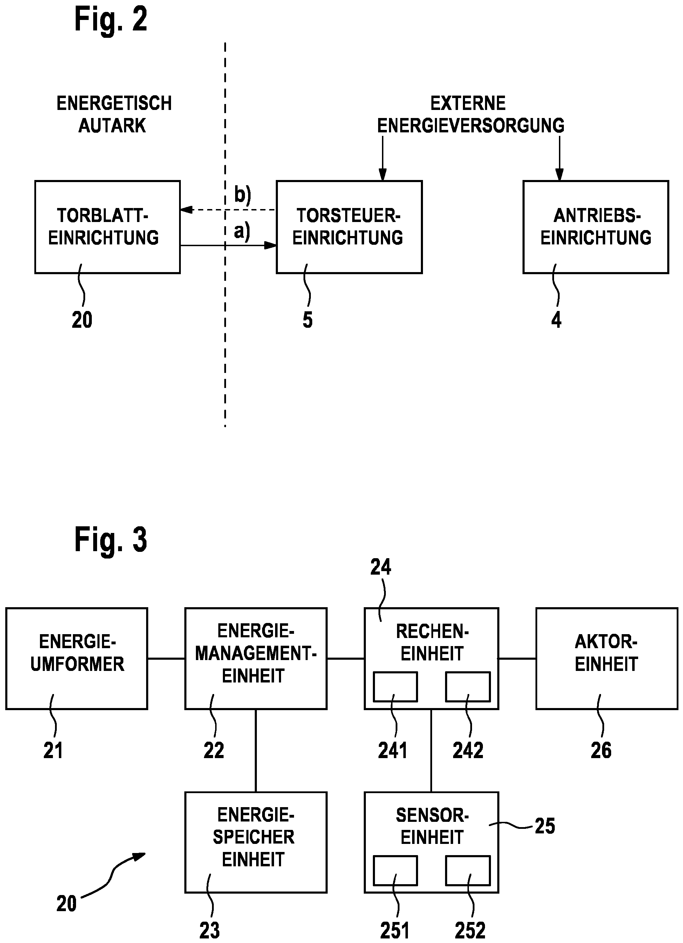

Fig. 2 zeigt eine Prinzipdarstellung eines Systems aus der elektrischen Torblatteinrichtung 20, der Torsteuereinrichtung 5 sowie der Antriebseinrichtung 4. Die Torblatteinrichtung 20 ist dabei wie in Fig. 1 gezeigt in dem Torblatt 2 angeordnet.

Die Antriebseinrichtung 4 sowie die Torsteuereinrichtung 5 können ortsfest und benachbart zu dem Torblatt 2 angeordnet sein. Die Kommunikation zwischen der Torblatteinrichtung 20, der Torsteuereinrichtung 5 sowie der Antriebseinrichtung 4 kann über Funk bi- oder unidirektional erfolgen. Ist die Kommunikation zwischen Torblatteinrichtung 20 und Torsteuereinrichtung 5 unidirektional, dargestellt durch den Pfeil a) in Fig.2, so ist die Torblatteinrichtung 20 als Sendeeinheit und die Torsteuereinrichtung 5 als Empfangseinheit ausgebildet. Erfolgt die Kommunikation zwischen Torblatteinrichtung 20 und Torsteuereinrichtung 5 bidirektional, in Fig. 2 dargestellt durch die Pfeile a) und b), so sind sowohl die Torblatteinrichtung 20 als auch die Torsteuereinrichtung 5 als Sende- und Empfangseinheit ausgebildet. Dabei werden mit Hilfe der Sensoreinheit 25 erfasste Parameter über die Sende- und Empfangseinheit 241 der Torblatteinrichtung 20 zu der Sende- und Empfangseinheit der Torsteuereinrichtung übertragen.

Die Signalübertragung zwischen der ersten und zweiten Sende- und Empfangseinheit 241, ein Beispiel einer Kommunikationseinheit, kann über eine bidirektionale Funkstrecke erfolgen. Beispielsweise kann die Kommunikation/Übertragung mit Bluetooth etwa über die Protokolle Baseband, L2CAP, oder LMP erfolgen. Nach Identifizierung der ersten beziehungsweise zweiten Sende- und Empfangseinheit 241 über die jeweilige 48-Bit Adresse erfolgt die Datenübertragung über Datenpakete. Als Schnittstelle zu den Mikrocontrollereinheiten kann beispielsweise die serielle Schnittstelle RS-232 oder auch der I2C-Bus verwendet werden.

Wie vorstehend erläutert kann die Signalübertragung beziehungsweise Kommunikation über eine unidirektionale Funkstrecke erfolgen. Dabei ist an der Torsteuereinrichtung 5 nur eine Empfangseinheit vorgesehen, während an der Torblatteinrichtung nur eine Sendeeinheit vorgesehen ist. Es kann eine unidirektionale Datenübertragung für bestimmte Anwendungen ausreichend sein. Auch ist diese Art der Datenübertragung im Vergleich zur bidirektionalen Datenübertragung energiesparend, da seitens der Torblatteinrichtung 20 keine Energie für die Bereitschaft zum Empfang beziehungsweise für einen Empfang von Daten verbraucht wird.

Mit der Torsteuereinrichtung 5 können mehrere Einrichtungen verbunden sein, wie beispielsweise ein Öffnungsschalter, eine Fernbedienung, oder weitere Sensoren, die den Toröffnungsbereich erfassen. Die Torsteuereinrichtung 5 berücksichtigt die Informationen beziehungsweise betriebsrelevante Parameter, welche von den weiteren Einrichtungen empfangen werden, und steuert die Antriebseinrichtung 4 derart an, dass diese das Rolltor 1 entsprechend dem gewünschten Betriebsmodus öffnet oder schließt.

Neben diesen Informationen erhält die Torsteuereinrichtung 5 weitere betriebsrelevante Parameter von der Torblatteinrichtung 20. Diese betriebsrelevanten Parameter werden von der Torsteuereinrichtung 5 ebenso bei der Ansteuerung der Antriebseinrichtung 4 berücksichtigt.

Die Verbindung zwischen Torsteuereinrichtung 5 und Antriebseinrichtung 4 kann sowohl über Kabel als auch kabellos, beispielsweise wie oben dargestellt über Funk, erfolgen. Die Antriebseinrichtung 4 treibt abhängig von den empfangenen Befehlen das Torblatt 2 an.

Wird beispielsweise über die Sensoreinheit 25 ein verriegelter Zustand der Torblatteinrichtung 20 erfasst, übermittelt die zweite Sende- und Empfangseinheit 241 ein Signal, das diesen Zustand anzeigt, an die erste Sende- und Empfangseinheit. Die Torsteuereinrichtung 5 verarbeitet dieses Signal und steuert die Antriebseinrichtung 4, solange der verriegelte Zustand besteht, nicht mehr an.

Fig. 3 zeigt eine Prinzipdarstellung der funktionalen Baugruppen der in Fig. 1 und Fig. 2 dargestellten elektromechanischen Torblatteinrichtung 20. Die Torblatteinrichtung 20 weist einen Energieumformer 21, eine Energiemanagementeinheit 22, eine Energiespeichereinheit 23, eine Recheneinheit 24 sowie die Sensoreinheit 25 auf.

Der erfindungsgemäße Energieumformer 21 kann beispielsweise die mechanische Energie des Torblatts 2 in elektrische Energie umwandeln, um damit die elektrischen Verbraucher in der Torblatteinrichtung 20 zu versorgen. Mögliche Ausgestaltungen des Energieumformers 21 werden unten im Detail beschrieben. Bei einem Öffnung- und/oder Schließvorgang kann der Energieumformer 21 ausreichend Leistung für einen zumindest rudimentären Betrieb der Verbraucher erzeugen. Beispielsweise ist es so möglich einige 10 mW Leistung zu erzeugen, was für den Betrieb von entsprechenden Low-Power-Komponenten ausreichend ist. Über die Energiemanagementeinheit 22 geregelt, kann die vom Energieumformer 21 erzeugte Leistung zum Laden der Energiespeichereinheit 23 und/oder zum Versorgen der Verbraucher verwendet werden.

Die erfindungsgemäße Energiemanagementeinheit 22 fungiert als Schnittstelle zwischen Energieumformer 21, Energiespeichereinheit 23 und den weiteren in der Torblatteinrichtung 20 enthaltenen elektrischen Verbrauchen. Zudem wandelt die Energiemanagementeinheit 22, üblicherweise mittels einer einfachen elektronischen Schaltung, die vom Energieumformer 21 erzeugte Energie (Spannung, Strom) derart um, dass diese in der Energiespeichereinheit 23 längerfristig gespeichert werden kann. Beispielsweise wird mittels eines Brückengleichrichters die vom Energieumformer 21 erzeugte Wechselspannung in eine Gleichspannung umgewandelt. Dabei ist die Energiemanagementeinheit 22 derart ausgelegt, dass diese selbst einen hohen Wirkungsgrad aufweist und wenig Energie verbraucht.

Die Energiespeichereinheit 23 ist vorzugsweise ein Kondensator mit einer großen Kapazität (zumindest mehrere 10 $\mu$F), beispielsweise ein "Goldcap" mit zumindest mehreren mF, welcher der Zwischenspeicherung der vom Energieumformer 21 erzeugten elektrischen Energie dient. Die Energiespeichereinheit 23 ist mit der Energiemanagementeinheit 22 verbunden. So soll die Energiespeichereinheit 23 für die Verbraucher der erfindungsgemäßen Torblatteinrichtung 20 Energie zu Zeiten verfügbar machen, bei denen der Energieumformer 21 keine oder zu wenig Energie erzeugt. Die Energiespeichereinheit 23 weist vorzugsweise eine geringe Selbstentladerate auf, damit die gespeicherte Energie auch über längere Zeiträume zur Verfügung steht und der Wirkungsgrad der Torblatteinrichtung 20 groß ist.

Die elektrischen Verbraucher der erfindungsgemäßen Torblatteinrichtung 20 umfassen zumindest eine Recheneinheit 24 sowie die Sensoreinheit 25. Die Recheneinheit 24 weist die zweite Sende- und Empfangseinheit 241 sowie die Signalverarbeitungseinheit 242 auf. Die Signalverarbeitungseinheit 242 kann über einen Mikrokontroller, etwa einen herkömmlichen 8-Bit-Mikrokontroller, oder alternativ über eine DSP (Digitaler-Signal-Prozessor) umgesetzt werden. Diese Signalverarbeitungseinheit 242 ist vorzugsweise in "ultra-low-power" Technologie ausgeführt.

Die Sensoreinheit 25 weist zumindest einen Sensor 251 zum Erfassen einer physikalischen Größe sowie eine Signalkonditionierungseinheit 252 auf. Der Sensor 251 erfasst zumindest einen physikalischen Parameter wie die Außentemperatur oder den Verriegelungszustand des Torblatts 2. Die Signalkonditionierungseinheit 252 kann das von dem Sensor 251 ausgegebene elektrische Signal verarbeiten, etwa filtern oder verstärken. Anschließend können die analogen Werte über einen AD-Wandler zur Verarbeitung in der Recheneinheit 24 in digitale Werte gewandelt werden. Im Fall mehrerer erfasster physikalischer Parameter kann die Signalkonditionierungseinheit 252 die elektrischen Signale multiplexen.

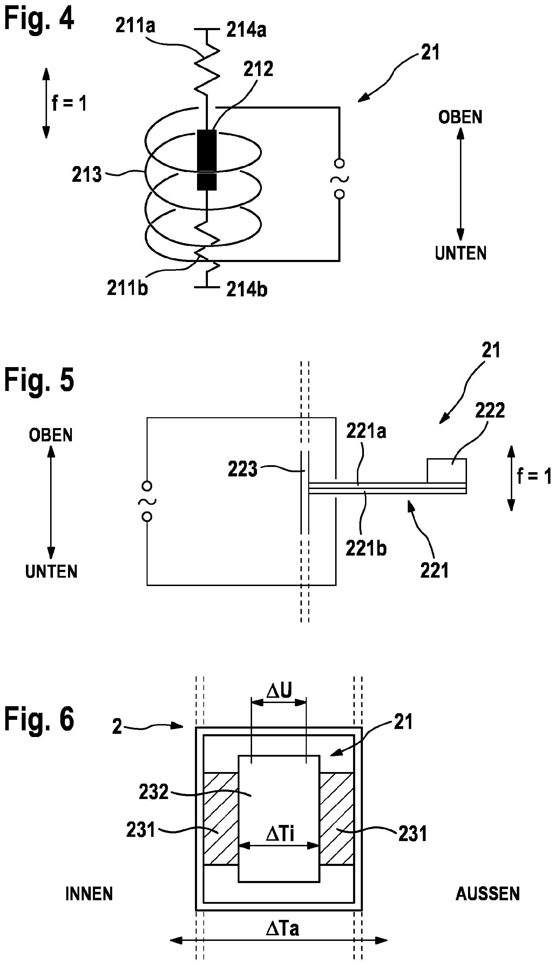

Fig. 4 und Fig. 5 zeigen je eine Ausführungsform eines Energieumformers 21, der die mechanische Energie des Torblatts 20 in elektrische Energie wandelt.

Der in Fig. 4 dargestellte Energieumformer 21 arbeitet mit Hilfe des Induktionsprinzips. Dazu sind in einem Hohlraum in dem Energieumformer 21 zwei gegenüberliegende Federn 211a und 211b angeordnet, welche beide entlang ihrer Mittelachsen, welche in der gleichen Richtung verlaufen, ausgelenkt werden können. Die Federn 211a und 211b sind durch Befestigungen 214a und 214b fest mit dem Abschlusselement 7 verbunden.

An den freien bewegbaren Enden der Federn 211a und 211b ist ein Magnet 212 befestigt. Damit kann sich der Magnet 212, welcher entlang der Mittelachsen der Federn 211a und 211b beweglich aufgehängt ist, sowohl in Richtung der einen Feder 211a als auch in Richtung der anderen Feder 211b bewegen. Der Freiheitsgrad f des Magneten 212 ist f = 1. Dies kann beispielsweise durch eine nicht näher dargestellte Linearführung des Magneten 212 oder durch eine zweiseitige Aufhängung des Magneten 212 erreicht werden. Die Federkonstanten der Federn 211a und 211b sind im Verhältnis zur Masse des Magneten 212 derart ausgelegt, dass diese eine oszillierende (gedämpfte) Schwingung des Magneten 212 erlauben. Wird nun der Energieumformer 21 in einer Richtung beschleunigt, in die der Magnet 212 auslenkbar ist, wird dem oszillierenden System aus Federn 211a, 211b und Magnet 212 mechanische Energie zugeführt. Dabei wird das oszillierende System insbesondere auch dann weiterschwingen, wenn die Beschleunigung des Energieumformers 21 geendet hat. Um eine größtmögliche Schwingung des oszillierenden Systems zu erzielen, fallen die Richtungen der Beschleunigungskräfte, welche auf den Energieumformer 21 wirken können, mit den Richtungen zusammen, in denen der Magnet 212 auslenkbar ist.

Die erfindungsgemäße Aufhängung des Magneten 212 erlaubt eine lineare Auslenkung desselben. Übereinstimmend ist auch die Bewegung des Abschlusselements 7 über große Bereiche eine lineare Bewegung. Entsprechend ist der Energieumformer 21 derart in dem Abschlusselement 7 angeordnet, dass der Bewegungsfreiheitsgrad (Translationsfreiheitsgrad f = 1) des Magneten 212 mit der Öffnungs- und Schließrichtung übereinstimmt. Damit wird der Wirkungsgrad des Energieumformers 21 optimiert.

Zudem ist eine Spule 213 in dem Energieumformer 21 derart angeordnet, dass sich der Magnet 212 entlang derer Mittelachse bewegt. So bewegt sich der Magnet 212 zumindest teilweise in der Spule 213 hin und her. Bei einer oszillierenden Schwingung des Magneten 212 wird mittels Induktion elektrische Energie erzeugt, welche am Ausgang des Energieumformers 21 in Form einer Wechselspannung zur Verfügung gestellt wird. Ein besonderer Vorteil des erfindungsgemäßen linearen Energieumformers 21 ist, dass dieser derart an die quasi deterministisch vorhersehbare Bewegung und die damit einhergehenden Beschleunigungskräfte des Torblatts 2 angepasst sein kann, so dass der Wirkungsgrad maximal wird beziehungsweise die Energieausbeute hoch ist. Besonders vorteilhaft ist es, wenn der Energieumformer 21 in dem Abschlusselement 7 angeordnet ist, da die Bewegung des Abschlusselements 7, im Vergleich zu anderen Elementen des Torblatts 7, hauptsächlich entlang einer Geraden verläuft. Damit sind die durch die Bewegung des Torblatts 2 auf den Magneten 212 wirkenden Trägheitskräfte parallel zu den durch die Federn 211a und 211b auf den Magneten 212 wirkenden Kräfte. Durch diese Ausrichtung der an dem Magneten 212 angreifenden Kräfte wird die Energieübertragung auf die Federn 211a und 211b optimiert. Damit kann schließlich eine effiziente Energieumwandlung erreicht werden.

Der in Fig. 5 dargestellte alternative Energieumformer 21 arbeitet nach dem piezoelektrischen Prinzip. In dem Abschlusselement 7 ist ein Befestigungselement 223 angeordnet. An diesem Befestigungselement 223 ist ein Biegeschwinger 221, die beiden Biegeschwingerelemente 221a und 221b umfassend, mit seinem einem Ende angebracht. Der Biegeschwinger 221 ist vorzugsweise ein piezoelektrisches Element, welches aus dem Stand der Technik bekannt ist. An dem anderen, freien Ende des Biegeschwingers 221 ist eine Masse 222 angebracht. Der Biegeschwinger 221 sowie die Masse 222 sind senkrecht zur Bewegungsrichtung des Torblatts 21 derart angeordnet, dass der Biegeschwinger 221 bei Beschleunigung des Torblatts 2 möglichst effektiv ausgelenkt wird.

Wird das Torblatt 2 geöffnet oder geschlossen, wird der Energieumformer 21 mit dem Torblatt 2 beschleunigt. Durch die der Beschleunigung entgegengesetzte auf die Masse 222 wirkende Trägheitskraft wird der Biegeschwinger 221 ausgelenkt und wiederum in eine gedämpfte oszillierende Schwingung versetzt. Dadurch erzeugt der Biegeschwinger 221 eine Wechselspannung, welche der Energieumformer 21 an seinem Ausgang zur Verfügung stellt.

Der erfindungsgemäße Biegeschwinger 221 ist senkrecht zu der Bewegungsrichtung des Torblatts 2 derart angeordnet, dass er bei einer Beschleunigung des Torblatts 2 seine maximale Auslenkung erreicht. Der Biegeschwinger 221 ist derart angeordnet, dass er im Wesentlichen nur einen translatorischen Freiheitsgrad (f = 1) aufweist. Da der Biegeschwinger 221 einseitig eingespannt ist und an seinem freien Ende die Masse 222 angebracht ist, kann diese Masse 222 die Auslenkung des Biegeschwingers 221 noch verstärken. Die Gewichtskraft und der Angriffspunkt der Masse 222 auf dem Biegeschwinger 221 sowie die Auslegung des Biegeschwingers 221 selbst, etwa Länge, Dicke und Elastizitätsmodul, sind derart ausgebildet, dass die erzeugte elektrische Spannung maximal ist.

In Fig. 6 ist ein thermoelektrischer Energieumformer 21 dargestellt. Der thermoelektrische Energieumformer 21 weist thermisch leitfähige Zwischenelemente 231, vorzugsweise Platten 231, zur elektrischen Isolierung sowie zumindest ein Thermoelement 232 auf. Die einander gegenüberliegenden Zwischenelemente 231 oder Platten 231 sind in einer Lamelle derart angebracht, dass die jeweilige Platte 231 mit der jeweiligen Seite der Lamelle des Torblatts thermisch verbunden ist, so dass die Platten 231 jeweils annähernd die Umgebungstemperatur der ersten beziehungsweise zweiten Torseite annehmen kann. Durch das Torblatt 2 werden üblicherweise Räume oder Areale getrennt, die regelmäßig einen Temperaturunterschied aufweisen können. Beispielsweise können die erste Seite und die zweite Seite des Torblatts 2 entsprechend jeweils einer Innen- und Außenseite eines Gebäudes zugewandt sein.

Im Ergebnis herrscht regelmäßig zwischen der zugehörigen Innen- und Außenseite des Torblatts 2 ein Temperaturunterschied $\Delta Ta$. Beispielsweise kann im Halleninneren aufgrund der Hallenheizung eine höhere Umgebungstemperatur vorliegen als außerhalb der Halle, wodurch dann auch die Zwischenelemente beziehungsweise Platten 231 jeweils entsprechende unterschiedliche Temperaturen aufweisen.

Das zumindest ein Thermoelement 232 ist weiter zwischen den beiden Platten 231 derart angeordnet, dass die jeweiligen verschiedenen Temperaturniveaus kommuniziert werden, so dass zwischen gegenüberliegenden Flächen des Thermoelements 232 eine Temperaturdifferenz ΔTi vorliegt. Als Material werden thermoelektrische Materialen mit hohen ZT-Werten, wie Mischkristallreihen aus $Bi_2Te_3$ mit $Bi_2Se_3$ und $Sb_2Te_3$, verwendet.

Um mehr Spannung zu erzeugen, können mehrere Thermoelemente 232 in Serie geschaltet werden. Folglich kann am Torblatt 2 eine größere Fläche genutzt werden, die sich bei Bedarf über die ganze Breite des Torblatts 2 erstrecken kann. Da die erzeugte Spannung von der Temperaturdifferenz (ΔTi) sowie der Anzahl der Thermoelemente 232 abhängig ist, eignet sich das Torblatt 2 wegen der vorstehend erläuterten spezifischen Charakteristik für die thermoelektrische Energiegewinnung.

Die potentiell nutzbare Fläche erstreckt sich über das gesamte Torblatt 2 wodurch eine große Anzahl an Thermoelementen 232 verbaut werden kann, oder auch große Thermoelemente verwendet werden können.

Auch der Einsatzort des Torblatts 2 selbst eignet sich wegen seiner spezifischen Anwendung als Trennelement zwischen verschiedenen Räumen, die meist unterschiedliche Temperaturniveaus aufweisen, besonders für den Einsatz thermoelektrischer Energieumformer 21. Damit kann der thermoelektrische Energieumformer 21 das Energiespeicherelement 23 effektiv aufladen, sowie die elektrischen Verbraucher der Torblatteinrichtung 20 mit elektrischer Energie versorgen.

Die Erfindung lässt neben den erläuterten Ausführungsformen und Aspekten weitere Gestaltungsgrundsätze zu. So können einzelne Merkmale der verschiedenen Ausführungsformen und Aspekte auch beliebig miteinander kombiniert werden, solange dies für den Fachmann als ausführbar ersichtlich ist.

So können beispielsweise die verschiedenen vorstehend dargelegten Sensoranordnungen /-prinzipien miteinander kombiniert werden. Die erfindungsgemäße Torblatteinrichtung kann also beispielsweise einen Kollisionssensor und ein Mehrzahl von Temperatursensoren aufweisen.

Auch kann beispielsweise der Energieumwandler einen Lineargenerator und ein Thermoelement aufweisen, womit also die verschiedenen vorstehend erläuterten Prinzipien der Energieumwandlung miteinander kombiniert werden können.

Weiter können alternativ auch andere Mechaniken für den elektromechanischen Energieumformer zum Einsatz kommen. Beispielsweise kann auch ein Dynamo mit einer Achse und mit einer an der Achse exzentrisch befestigten Masse zum Einsatz kommen.

Das erfindungsgemäße Tor, welches vorstehend mit dem Beispiel eines Rolltors erläutert wurde, kann beispielsweise auch ein Falttor oder ein Klapptor sein. So sind erfindungsgemäß alle Tore umfasst, bei denen Torblätter eine definierte Bewegung beziehungsweise einen vorbestimmten Laufweg erfahren.

Die Torblatteinrichtung muss sich zudem nicht im (unteren) Abschlusselement des Torblatts befinden. So kann die Torblatteinrichtung auch an einer beliebigen anderen Stelle des Torblatts untergebracht sein, beispielsweise in der Mitte.

Grundsätzlich kann die Torblatteinrichtung auch weitere (in Fig. 3 nicht dargestellte) Baugruppen, beispielsweise energieverbrauchsarme Anzeigeelemente, aufweisen.

Das in Fig. 1 dargestellte Torblatt kann sich von unten nach oben und umgekehrt bewegen. Erfindungsgemäß sind aber auch Tore umfasst, deren Torblätter sich in andere Richtungen, beispielsweise seitwärts, bewegen können.

**Patentansprüche**

1.  Tor (1), insbesondere schnelllaufendes Industrietor, aufweisend:

    ein Torblatt (2), welches in seitlichen Führungen (3) geführt ist, und welches eine Toröffnung abdeckt, und welches eine erste und eine zweite Seite aufweist; und
    eine Antriebseinrichtung (4) zum Bewegen des Torblatts (2) zwischen einer Öffnungs- und Schließstellung; und
    eine Torsteuereinrichtung (5) zum Ansteuern der Antriebseinrichtung (4), wobei die Torsteuereinrichtung (5) eine erste Kommunikationseinheit aufweist;
    eine in dem Torblatt (2) angeordnete elektrisch autarke Torblatteinrichtung (20), aufweisend:

    zumindest eine Sensoreinheit (25) zum Erfassen zumindest einer physikalischen Größe; und
    einen Energieumformer (21), welcher nichtelektrische Energie in elektrische Energie wandelt; und
    eine zweite Kommunikationseinheit (241), wobei die erste und die zweite Kommunikationseinheit miteinander drahtlos kommunizieren; und
    zumindest eine Aktoreinheit (26) und wobei
    der Energieumformer (21) ein mechanisches Energiespeicherelement, eine Feder und eine daran angebrachte schwingungsfähige Masse, aufweist, wodurch er Beschleunigungsbewegungen des Torblatts (2) in gedämpfte oszillierende Schwingungen der Masse umwandelt;
    der Energieumformer (21) aufgrund der Bewegung des Torblatts (2) vorhandene mechanische Energie der gedämpften oszillierenden Schwingungen der Masse in elektrische Energie wandelt; und wobei ein Freiheitsgrad der Masse des Energieumformers (21) f = 1 ist, und wobei der Freiheitsgrad der Masse derart vorgesehen ist, dass dieser mit den wesentlichen Beschleunigungsrichtungen eines Abschlusselements (7) des Torblatts (2) übereinstimmt.

**2.** Tor (1) nach Anspruch 1, wobei
der Energieumformer (21) derart eingerichtet ist, dass dieser auf dem Induktionsprinzip basiert.

**3.** Tor (1) nach Anspruch 2, wobei
der Energieumformer (21) ein Lineargenerator ist.

**4.** Tor (1) nach einem der vorhergehenden Ansprüche, wobei

das Torblatt (2) ein Abschlusselement (7) aufweist,
die zumindest eine Sensoreinheit (25) einen Kollisionssensor aufweist, der im Abschlusselement (7) angeordnet ist.

**5.** Tor (1) nach einem der vorhergehenden Ansprüche, wobei

das Torblatt (2) eine Verriegelung aufweist, und
die zumindest eine Sensoreinheit (25) einen Verriegelungssensor aufweist, der den Verriegelungszustand der Verriegelung erfasst, und wobei
die Torblatteinrichtung (20) den Verriegelungszustand der mechanischen oder elektrischen Verriegelung an die Torsteuereinrichtung (5) überträgt, und die Torsteuereinrichtung (5) den Antrieb unterbindet, falls das Torblatt (2) verriegelt ist.

**6.** Tor (1) nach einem der vorhergehenden Ansprüche, wobei
die Verriegelung eine mechanische oder elektrische Einrichtung, beispielsweise ein Schalter, ist.

**7.** Tor (1) nach einem der vorhergehenden Ansprüche, wobei
die zumindest eine Sensoreinheit (25) Temperatursensoren, welche die Temperaturdifferenz zwischen der ersten und der zweiten Seite des Torblatts (2) erfassen, und/oder Außentemperatursensoren und/oder Beschleunigungssensoren zur Erfassung der Bewegungsrichtung des Torblatts (2) und dessen Beschleunigung aufweist.

**8.** Tor (1) nach einem der vorhergehenden Ansprüche, wobei

die zumindest eine Sensoreinheit (25) Temperatursensoren aufweist, wobei
die gemessene Temperaturdifferenz von der Torblatteinrichtung (20) an die Torsteuereinrichtung (5) übertragen wird, welche damit die Dichtigkeit des Tors (1) beurteilt.

**9.** Tor (1) nach einem der vorhergehenden Ansprüche, wobei

die zumindest eine Sensoreinheit (25) zumindest einen Außentemperatursensor aufweist, wobei
die gemessene Außentemperatur durch die Torblatteinrichtung (20) an die Torsteuereinrichtung (5) übertragen wird, welche mittels eines Vergleichs des voreingestellten Schwellwerts mit der gemessenen Außentemperatur zwischen einem Sommer- und einem Winterbetrieb umschaltet, wobei
das Tor (1) im Sommerbetrieb in seiner Schließstellung nicht vollständig geschlossen wird.

**10.** Tor (1) nach einem der vorhergehenden Ansprüche, wobei

die zumindest eine Sensoreinheit (25) zumindest einen Beschleunigungssensor aufweist und
die durch den Beschleunigungssensor gemessenen Werte durch die Torblatteinrichtung (20) an die Torsteuereinrichtung (5) übertragen werden, wobei die Torsteuereinrichtung (5) durch einen Vergleich der Beschleunigungswerte mit zumindest einem voreingestellten ersten Beschleunigungsschwellwert beurteilt, ob das Tor (1) beschädigt oder verschlissen ist.

**11.** Tor (1) nach einem der vorhergehenden Ansprüchen, wobei

die Sensoreinheit (25) zumindest einen Beschleunigungssensor aufweist, und
die durch den Beschleunigungssensor gemessenen Werte durch die Torblatteinrichtung (20) an die Torsteuereinrichtung (5) übertragen werden, wobei die Torsteuereinrichtung (5) durch einen Vergleich der Beschleunigungswerte mit zumindest einem voreingestellten zweiten Beschleunigungsschwellwert beurteilt, ob unzulässige Benutzereinstellungen am Tor (1) vorgenommen worden sind.

12. Tor (1) nach einem der vorhergehenden Ansprüche, die Torblatteinheit ferner aufweisend:

eine Energiespeichereinheit (23) zum Speichern der vom Energieumformer (21) erzeugten elektrischen Energie; und/oder
eine Energiemanagementeinheit (22) zum Verwalten vom Energieumformer (21) erzeugten Energie; und/oder
eine Recheneinheit (24), wobei
die Recheneinheit (24) optional eine Signalverarbeitungseinheit und/oder eine Aktoreinheit (26) aufweist.

13. Tor (1) nach einem der vorhergehenden Ansprüche, wobei:
die Torblatteinrichtung (20) den Energieformer (21), die Energiemanagementeinheit (22), die Energiespeichereinheit (23), die Recheneinheit (24), die Sensoreinheit (25) und die zumindest eine Aktoreinheit (26) aufweist und eine energetisch autarke Systemeinheit ausbildet, wobei die umgewandelte und gespeicherte Energie zur Energieversorgung dieser Komponenten verwendet wird, wobei eine externe Energiezufuhr zur Torblatteinrichtung (20) nicht erforderlich ist.

14. Tor (1) nach einem der vorhergehenden Ansprüche, wobei:
die Torblatteinrichtung (20) eine integrierte Baugruppe ausbildet; und/oder die Torblatteinrichtung (20) in einem Abschlusselement (7) des Torblatts (2) angeordnet ist.

15. Verfahren zum Betrieb eines Tors (1), insbesondere eines schnelllaufenden Industrietors, aufweisend die folgenden Schritte:

Umwandeln von nicht elektrischer Energie in elektrische Energie mittels eines Energieumformers (21) einer in einem Torblatt (2) des Tors (1) angeordneten Torblatteinrichtung (20), wobei der Energieumformer (21) ein mechanisches Energiespeicherelement, vorzugsweise eine Feder, und eine daran angebrachte schwingungsfähige Masse aufweist, wodurch er Beschleunigungsbewegungen des Torblatts (2) in gedämpfte oszillierende Schwingungen der Masse umwandelt;
Speichern der elektrischen Energie in einer Energiespeichereinheit (23) der Torblatteinrichtung (20);
Erfassen von zumindest einer physikalischen Größe durch zumindest eine Sensoreinheit (25) der Torblatteinrichtung (20);
Übertragen der erfassten physikalischen Größe durch eine Kommunikationseinheit (241) der Torblatteinrichtung (20) an eine ortsfeste Torsteuereinrichtung (5), welche zum Ansteuern einer Antriebseinrichtung (4) des Tors (1) vorgesehen ist;
wobei die Übertragung drahtlos erfolgt, und
wobei der Schritt des Erfassens und der Schritt des Übertragens unter, vorzugsweise ausschließlicher Verwendung der gespeicherten elektrischen Energie, erfolgen.

16. Verfahren nach Anspruch 15, wobei
die erfasste physikalische Größe zumindest eine Temperatur an dem Torblatt (2) und/oder eine Beschleunigung des Torblatts (2) ist.

17. Verwendung eines Energieumformers (21) zur Umwandlung von nicht elektrischer Energie in elektrische Energie zur Energieversorgung einer in einem Torblatt (2) eines Tors (1) angeordneten elektrisch autarken Torblatteinrichtung (20) mit zumindest einer Sensoreinheit (25) zum Erfassen von zumindest einer physikalischen Größe, wobei der Energieumformer (21) ein mechanisches Energiespeicherelement, vorzugsweise eine Feder, und eine daran angebrachte schwingungsfähige Masse aufweist, wodurch er Beschleunigungsbewegungen des Torblatts (2) in gedämpfte oszillierende Schwingungen der Masse umwandelt.

**Claims**

1. Door (1), in particular a high-speed industrial door, comprising:

a door leaf (2) which is guided in lateral guides (3), and which covers a door opening, and which has a first and a second side; and

a driving means (4) for moving the door leaf (2) between an opened and closed position; and

a door control means (5) for driving the driving means (4), wherein the door control means (5) comprises a first communication unit;

an electrically self-sufficient door leaf means (20) arranged in the door leaf (2), comprising:

at least one sensor unit (25) for detecting at least one physical quantity; and

an energy converter (21) that converts non-electrical energy into electrical energy; and

a second communication unit (241), wherein the first and second communication units communicate with each other wirelessly; and

at least one actuator unit (26); and wherein

the energy converter (21) has a mechanical energy storage element, a spring and an oscillatable mass attached thereto, thereby converting acceleration movements of the door leaf (2) into damped oscillating vibrations of the mass;

the energy converter (21) converts existing mechanical energy of the damped oscillating vibrations of the mass into electrical energy due to the movement of the door leaf (2); and wherein

a degree of freedom of the mass of the energy converter (21) is $f = 1$, and wherein

the degree of freedom of the mass is provided such that it coincides with the essential directions of acceleration of a terminating element (7) of the door leaf (2).

2. The door (1) according to claim 1, wherein:
the energy converter (21) is configured to be based on the induction principle.

3. The door (1) according to claim 2, wherein:
the energy converter (21) is a linear generator.

4. The door (1) according to any one of the preceding claims, wherein

the door leaf (2) has a terminating element (7),
the at least one sensor unit (25) comprises a collision sensor arranged in the terminating element (7).

5. The door (1) according to any one of the preceding claims, wherein

the door leaf (2) has a lock, and
the at least one sensor unit (25) comprises a locking sensor that detects the locking state of the locking, and wherein
the door leaf means (20) transmits the locking state of the mechanical or electrical locking to the door control means (5), and the door control means (5) prevents the drive if the door leaf (2) is locked.

6. The door (1) according to any one of the preceding claims, wherein
the latch is a mechanical or electrical device, for example, a switch.

7. The door (1) according to any one of the preceding claims, wherein
the at least one sensor unit (25) has temperature sensors that detect the temperature difference between the first and the second side of the door leaf (2), and/or outside temperature sensors and/or acceleration sensors for detecting the direction of movement of the door leaf (2) and its acceleration.

8. The door (1) according to any one of the preceding claims, wherein

the at least one sensor unit (25) comprises temperature sensors, wherein
the measured temperature difference is transmitted from the door leaf means (20) to the door control means (5), which thereby assesses the tightness of the door (1).

9. The door (1) according to any one of the preceding claims, wherein

the at least one sensor unit (25) has at least one outside temperature sensor, wherein
the measured outside temperature is transmitted by the door leaf means (20) to the door control means (5), which switches between summer and winter operation by comparing the preset threshold value with the measured outside temperature, wherein
the door (1) is not completely closed in its closed position during summer operation.

**10.** The door (1) according to any one of the preceding claims, wherein

the at least one sensor unit (25) has at least one acceleration sensor, and
the values measured by the acceleration sensor are transmitted by the door leaf means (20) to the door control means (5), wherein the door control means (5) judges whether the door (1) is damaged or worn by comparing the acceleration values with at least one preset first acceleration threshold value.

**11.** The door (1) according to any one of the preceding claims, wherein

the sensor unit (25) has at least one acceleration sensor, and
the values measured by the acceleration sensor are transmitted by the door leaf means (20) to the door control means (5), wherein the door control means (5) judges whether impermissible user settings have been made on the door (1) by comparing the acceleration values with at least one preset second acceleration threshold value.

**12.** The door (1) according to any one of the preceding claims, the door leaf unit further comprising:

an energy storage unit (23) for storing the electrical energy generated by the energy converter (21); and/or
an energy management unit (22) for managing energy generated by the energy converter (21); and/or
a computing unit (24), wherein
the computing unit (24) optionally has a signal processing unit and/or an actuator unit (26).

**13.** The door (1) according to any one of the preceding claims, wherein:
the door leaf means (20) comprises the energy converter (21), the energy management unit (22), the energy storage unit (23), the arithmetic unit (24), the sensor unit (25), and the at least one actuator unit (26), and forms an energetically self-sufficient system unit, wherein the converted and stored energy is used to supply energy to these components, wherein an external energy supply to the door leaf means (20) is not required.

**14.** The door (1) according to any one of the preceding claims, wherein:

the door leaf means (20) forms an integrated assembly; and/or
the door leaf means (20) is arranged in a terminating element (7) of the door leaf (2).

**15.** A method for operating a door (1), in particular of a high-speed industrial door comprising to following steps:

Converting non-electrical energy into electrical energy by means of an energy converter (21) of a door leaf means (20) arranged in a door leaf (2) of the door (1), wherein the energy converter (21) has a mechanical energy storage element, preferably a spring, and an oscillatable mass attached thereto, whereby it converts acceleration movements of the door leaf (2) into damped oscillating vibrations of the mass;
Storing the electrical energy in an energy storage unit (23) of the door leaf means (20);
Detecting at least one physical variable by at least one sensor unit (25) of the door leaf means (20);
Transmitting the detected physical quantity by a communication unit (241) of the door leaf means (20) to a stationary door control means (5), which is provided for driving a driving means (4) of the door (1);
the transmission being wireless, and
wherein the step of detecting and the step of transferring occur under, preferably exclusive use of, the stored electrical energy.

**16.** The method according to claim 15, wherein:
the sensed physical quantity is at least one of a temperature at the door leaf (2) and/or an acceleration of the door leaf (2).

**17.** Use of an energy converter (21) for converting non-electrical energy into electrical energy for supplying energy to an electrically self-sufficient door leaf means (20) arranged in a door leaf (2) of a door (1), having at least one sensor unit (25) for detecting at least one physical variable, the energy converter (21) having a mechanical energy storage element, preferably a spring, and an oscillatable mass attached thereto, whereby it converts acceleration movements of the door leaf (2) into damped oscillating oscillations of the mass.

**Revendications**

1. Porte (1), en particulier porte industrielle à grande vitesse, présentant :

   un panneau de porte (2) qui est guidé dans des guidages latéraux (3) et qui recouvre une ouverture de porte, et qui présente un premier et un second côté ; et
   un dispositif d'entraînement (4) destiné à déplacer le panneau de porte (2) entre une position ouverte et une position fermée ; et
   un dispositif de commande de porte (5) pour commander le dispositif d'entraînement (4), dans laquelle le dispositif de commande de porte (5) présente une première unité de communication ;
   un dispositif de panneau de porte (20) électriquement autonome disposé dans le panneau de porte (2), présentant :

   au moins une unité de détection (25) pour détecter au moins une grandeur physique ; et
   un convertisseur d'énergie (21)qui convertit de l'énergie non électrique en énergie électrique ; et
   une seconde unité de communication (241), dans laquelle la première et la seconde unité de communication communiquent entre elles sans fil ; et
   au moins une unité d'actionnement (26) et dans laquelle
   le convertisseur d'énergie (21) présente un élément de stockage d'énergie mécanique, un ressort et une masse oscillante fixée à celui-ci, moyennant quoi il convertit des mouvements d'accélération du panneau de porte (2) en mouvements oscillants amortis de la masse ;
   le convertisseur d'énergie (21) convertit l'énergie mécanique existante des mouvements oscillants amortis de la masse en énergie électrique en raison du mouvement du panneau de porte (2) ; et dans laquelle
   un degré de liberté est la masse du convertisseur d'énergie (21) f = 1, et dans laquelle
   le degré de liberté de la masse est prévu de telle sorte que celui-ci correspond aux principales directions d'accélération d'un élément de fermeture (7) du panneau de porte (2).

2. Porte (1) selon la revendication 1, dans laquelle
   le convertisseur d'énergie (21) est configuré de telle sorte que celui-ci s'appuie sur le principe d'induction.

3. Porte (1) selon la revendication 2, dans laquelle
   le convertisseur d'énergie (21) est un générateur linéaire.

4. Porte (1) selon l'une quelconque des revendications précédentes, dans laquelle

   le panneau de porte (2) présente un élément de fermeture (7),
   qui présente au moins une unité de détection (25) d'un capteur de collision qui est disposé dans l'élément de fermeture (7).

5. Porte (1) selon l'une quelconque des revendications précédentes, dans laquelle

   le panneau de porte (2) présente un verrouillage, et
   qui présente au moins une unité de détection (25) d'un capteur de verrouillage qui détecte l'état de verrouillage du verrouillage, et dans laquelle
   le dispositif de panneau de porte (20) transmet l'état de verrouillage du verrouillage mécanique ou électrique au dispositif de commande de porte (5), et le dispositif de commande de porte (5) empêche l'entraînement si le panneau de porte (2) est verrouillé.

6. Porte (1) selon l'une quelconque des revendications précédentes, dans laquelle
   le verrouillage est un dispositif mécanique ou électrique, par exemple un commutateur.

7. Porte (1) selon l'une quelconque des revendications précédentes, dans laquelle
   l'au moins une unité de détection (25) présente des capteurs de température qui détectent la différence de température entre le premier côté et le second côté du panneau de porte (2), et/ou présente des capteurs de température extérieure et/ou des capteurs d'accélération pour détecter la direction de mouvement du panneau de porte (2) et son accélération.

8. Porte (1) selon l'une quelconque des revendications précédentes, dans laquelle

l'au moins une unité de détection (25) présente des capteurs de température, dans laquelle la différence de température mesurée est transmise par le dispositif de panneau de porte (20) au dispositif de commande de porte (5) qui détermine ainsi l'étanchéité de la porte (1).

9. Porte (1) selon l'une quelconque des revendications précédentes, dans laquelle

l'au moins une unité de détection (25) présente au moins un capteur de température extérieure, dans laquelle la température extérieure mesurée est transmise par le dispositif de panneau de porte (20) au dispositif de commande de porte (5), qui commute au moyen d'une comparaison entre la valeur seuil prédéfinie et la température extérieure mesurée entre un mode été et un mode hiver, dans laquelle la porte (1) n'est pas complètement fermée en mode été dans sa position fermée.

10. Porte (1) selon l'une quelconque des revendications précédentes, dans laquelle

l'au moins une unité de détection (25) présente au moins un capteur d'accélération et les valeurs mesurées par le capteur d'accélération sont transmises par le dispositif de panneau de porte (20) au dispositif de commande de porte (5), dans laquelle le dispositif de commande de porte (5) évalue si la porte (1) est endommagée ou usée par une comparaison entre les valeurs d'accélération et au moins une première valeur seuil d'accélération prédéfinie.

11. Porte (1) selon l'une quelconque des revendications précédentes, dans laquelle l'unité de détection (25) présente au moins un capteur d'accélération, et les valeurs mesurées par le capteur d'accélération sont transmises par le dispositif de panneau de porte (20) au dispositif de commande de porte (5), dans laquelle le dispositif de commande de porte (5) évalue si des paramètres utilisateur non valides ont été appliqués à la porte (1) par une comparaison entre les valeurs d'accélération et au moins une seconde valeur seuil d'accélération prédéfinie.

12. Porte (1) selon l'une quelconque des revendications précédentes, l'unité de panneau de porte présentant en outre :

une unité de stockage d'énergie (23) pour stocker l'énergie électrique produite par le convertisseur d'énergie (21) ; et/ou une unité de gestion de l'énergie (22) pour gérer l'énergie produite par le convertisseur d'énergie (21) ; et/ou une unité de calcul (24), dans laquelle l'unité de calcul (24) présente facultativement une unité de traitement de signal et/ou une unité d'actionnement (26).

13. Porte (1) selon l'une quelconque des revendications précédentes, dans laquelle : le dispositif de panneau de porte (20) présente le convertisseur d'énergie (21), l'unité de gestion de l'énergie (22), l'unité de stockage d'énergie (23), l'unité de calcul (24), l'unité de détection (25) et l'au moins une unité d'actionnement (26) et forme une unité système énergétiquement autonome, dans laquelle l'énergie convertie et stockée est utilisée pour l'approvisionnement en énergie de ces composants, dans laquelle un apport externe en énergie n'est pas nécessaire pour le dispositif de panneau de porte (20).

14. Porte (1) selon l'une quelconque des revendications précédentes, dans laquelle :

le dispositif de panneau de porte (20) forme un assemblage intégré ; et/ou le dispositif de panneau de porte (20) est disposé dans un élément de fermeture (7) du panneau de porte (2).

15. Procédé de fonctionnement d'une porte (1), en particulier d'une porte industrielle à grande vitesse, présentant les étapes suivantes :

la conversion d'énergie non électrique en énergie électrique au moyen d'un convertisseur d'énergie (21) d'un dispositif de panneau de porte (20) disposé dans un panneau de porte (2) de la porte (1), dans lequel le convertisseur d'énergie (21) présente un élément de stockage d'énergie mécanique, de préférence un ressort, et une masse oscillante fixée à celui-ci, moyennant quoi il convertit des mouvements d'accélération du panneau de porte (2) en mouvements oscillants amortis de la masse ;

le stockage de l'énergie électrique dans une unité de stockage d'énergie (23) du dispositif de panneau de porte (20) ;

la détection d'au moins une grandeur physique par au moins une unité de détection (25) du dispositif de panneau de porte (20) ;

la transmission de la grandeur physique détectée par une unité de communication (241) du dispositif de panneau de porte (20) à un dispositif de commande de porte (5) fixe qui est prévu pour commander un dispositif d'entraînement (4) de la porte (1) ;

dans lequel la transmission s'effectue sans fil, et

dans lequel l'étape de détection et l'étape de transmission s'effectuent de préférence en utilisant exclusivement l'énergie électrique stockée.

16. Procédé selon la revendication 15, dans lequel
la grandeur physique détectée est au moins une température au niveau du panneau de porte (2) et/ou une accélération du panneau de porte (2).

17. Utilisation d'un convertisseur d'énergie (21) pour la conversion d'énergie non électrique en énergie électrique pour l'approvisionnement en énergie d'un dispositif de panneau de porte (20) électriquement autonome disposé dans un panneau de porte (2) d'une porte (1) avec au moins une unité de détection (25) pour détecter au moins une grandeur physique, dans laquelle le convertisseur d'énergie (21) présente un élément de stockage d'énergie mécanique, de préférence un ressort, et une masse oscillante fixée à celui-ci, moyennant quoi il convertit des mouvements d'accélération du panneau de porte (2) en mouvements oscillants amortis de la masse.

**Fig. 1**

## Fig. 2

ENERGETISCH
AUTARK

EXTERNE
ENERGIEVERSORGUNG

| TORBLATT-EINRICHTUNG | b) | TORSTEUER-EINRICHTUNG | ANTRIEBS-EINRICHTUNG |

a)

**20**          **5**          **4**

## Fig. 3

**24**

| ENERGIE-UMFORMER | ENERGIE-MANAGEMENT-EINHEIT | RECHEN-EINHEIT | AKTOR-EINHEIT |

**21**          **22**          **241**   **242**          **26**

| ENERGIE-SPEICHER EINHEIT | SENSOR-EINHEIT | **25** |

**20**

**23**          **251**   **252**

## Fig. 4

211a    214a

212

21

f = 1

OBEN

213

211b    214b

UNTEN

## Fig. 5

21

222

OBEN

221a

223

f = 1

UNTEN

221b

221

INNEN

## Fig. 6

2

ΔU

21

232

231

ΔTi

231

INNEN

AUSSEN

ΔTa

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202008013354 U1
- DE 20001473 U1
- DE 102008046538 A1